# EUROPEAN PATENT APPLICATION

(11) **EP 4 776 664 A1**
(43) Date of publication of application: **15.07.2026**
(21) Application number: 23951152.0
(22) Date of filing: 06.09.2023
(51) Int. Cl.: H04W 8/14

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: TIAN, Wenqiang, Dongguan, Guangdong 523860 (CN)
(74) Representative: Taor, Simon Edward William
(86) International application number: PCT/CN2023/117337
(87) International publication number: WO 2025/050325

(57) **Abstract**

A method for wireless communication and a communication device are provided. The method includes: sending, by a first device, capability information of the first device to a second device, where the capability information is associated with one or more of: model training; model compilation; and model deployment. In the embodiments of the present disclosure, the first device may send model-related capability information to the second device to indicate the capability information of the first device. Compared with conventional solutions in which the first device and the second device are unable to obtain capability information of each other, this helps the second device obtain the capability information of the first device, so as to select tasks matching the capability information (for example, a model training task, a model update task, a task of fine-tuning model parameters, a model deployment task, a model compilation task, or the like) to be performed by the first device, thereby improving the possibility of model-based communication between the first device and the second device.

## Description

### TECHNICAL FIELD

This disclosure relates to the field of communication technology, and in particularly to a method for wireless communication and a communication device.

### BACKGROUND

At present, solutions for addressing model-based communication issues have been introduced into practical communication systems, that is, multiple devices participating in communication can perform communication based on their respective models. As the coverage of communication systems continues to expand, various types of devices are introduced into the communication systems, such as terminal devices, terminal-side servers, network devices, and network-side servers. Model-related capabilities of different devices may differ, or in other words, different devices may have different levels of support for models. If the model-related capabilities of devices are treated uniformly, model-based communication between devices may fail.

### SUMMARY

The present disclosure provides a method for wireless communication and a communication device. Various aspects involved in the present disclosure are described below.

In a first aspect, a method for wireless communication is provided, including: sending, by a first device, capability information of the first device to a second device, where the capability information is associated with one or more of the following: model training; model compilation; and model deployment.

In a second aspect, a method for wireless communication is provided, including: receiving, by a second device, capability information of a first device sent by the first device, where the capability information is associated with one or more of the following: model training; model compilation; and model deployment.

In a third aspect, a communication device is provided. The communication device is a first device, and includes: a sending unit configured to send capability information of the first device to a second device, where the capability information is associated with one or more of the following: model training; model compilation; and model deployment.

In a fourth aspect, a communication device is provided. The communication device is a second device, and includes: a receiving unit configured to receive capability information of a first device sent by the first device, where the capability information is associated with one or more of the following: model training; model compilation; and model deployment.

In a fifth aspect, a communication device is provided, including a processor, a memory, and a communication interface. The memory is configured to store one or more computer programs, and the processor is configured to invoke the computer programs stored in the memory, so that the communication device performs part or all of the steps of the methods described in the foregoing aspects.

In a sixth aspect, a communication system is provided according to embodiments of the present disclosure. The communication system includes the terminal device and/or the network device described above. In another possible design, the communication system may further include other devices that can interact with the first device or the second device in the solutions provided in embodiments of the present disclosure.

In a seventh aspect, a computer-readable storage medium is provided according to embodiments of the present disclosure. The computer-readable storage medium stores a computer program, and the computer program enables a communication device (for example, the first device or the second device) to perform part or all of the steps of the methods described in the foregoing aspects.

In an eighth aspect, a computer program product is provided according to embodiments of the present disclosure. The computer program product includes a non-transitory computer-readable storage medium storing a computer program, and the computer program is operable to cause a communication device (for example, the first device or the second device) to perform part or all of the steps of the methods described in the foregoing aspects. In some implementations, the computer program product may be a software installation package.

In a ninth aspect, a chip is provided according to embodiments of the present disclosure. The chip includes a memory and a processor, where the processor is configured to invoke and execute a computer program from the memory, so as to implement part or all of the steps described in the methods of the foregoing aspects.

In embodiments of the present disclosure, the first device can send model-related capability information to the second device to indicate the capability information of the first device. Compared with conventional solutions in which the first device and the second device cannot obtain capability information of each other, the solutions of the present disclosure can help the second device obtain the capability information of the first device, so as to select tasks that match the capability information (for example, a model training task, a model updating task, a model parameter fine-tuning task, a model deployment task, a model compilation task, and the like) to be performed by the first device, thereby improving the possibility of model-based communication between the first device and the second device.

### BRIEF DESCRIPTION OF THE DRAWINGS

FIG. 1 illustrates a wireless communication system 100 applicable to embodiments of the present disclosure.
FIG. 2 is a schematic diagram illustrating channel estimation and signal recovery applicable to embodiments of the present disclosure.
FIG. 3 is a schematic diagram of an artificial intelligence (AI) model-based channel state information (CSI) feedback system applicable to embodiments of the present disclosure.
FIG. 4 is a schematic diagram of an AI model-based positioning scheme applicable to embodiments of the present disclosure.
FIG. 5 is a schematic diagram of AI model-based beam management applicable to embodiments of the present disclosure.
FIG. 6 is a schematic diagram of a neural network applicable to embodiments of the present disclosure.
FIG. 7 is a schematic diagram of a convolutional neural network (CNN) applicable to embodiments of the present disclosure.
FIG. 8 is a flow chart of a method for wireless communication according to an embodiment of the present disclosure.
FIG. 9 is a flow chart of a method for wireless communication according to another embodiment of the present disclosure.
FIG. 10 is a flow chart of a method for wireless communication according to another embodiment of the present disclosure.
FIG. 11 is a schematic diagram of a communication device according to an embodiment of the present disclosure.
FIG. 12 is a schematic diagram of a communication device according to another embodiment of the present disclosure.
FIG. 13 is a schematic structural diagram of a communication apparatus according to an embodiment of the present disclosure.

### DETAILED DESCRIPTION

The technical solutions of the present disclosure will be described below with reference to the accompanying drawings.

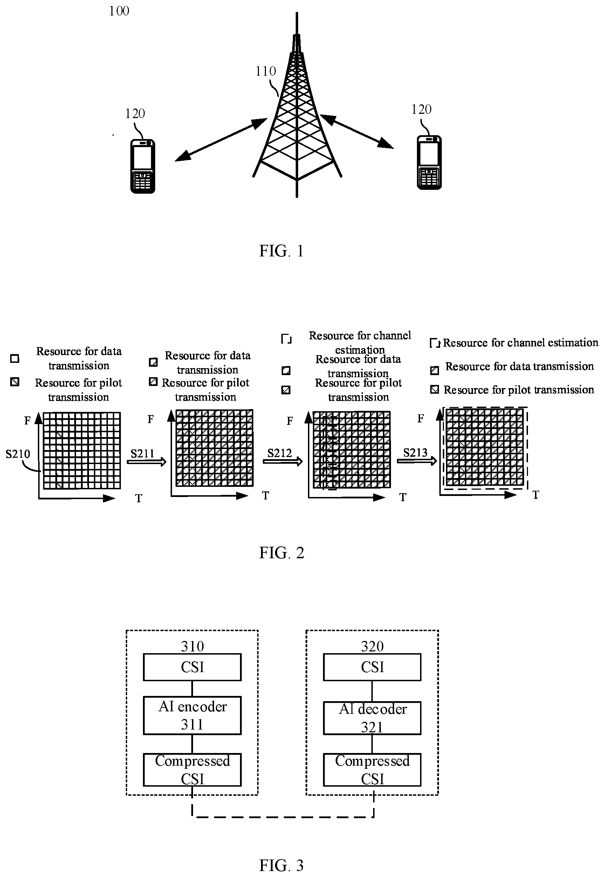

FIG. 1 illustrates a wireless communication system 100 applicable to embodiments of the present disclosure. The wireless communication system 100 may include a network device 110 and terminal devices 120. The network device 110 may be a device that can communicate with the terminal devices 120. The network device 110 may provide communication coverage for a specific geographic area and may communicate with the terminal devices 120 located within the coverage area.

FIG. 1 exemplarily illustrates one network device and two terminals. Optionally, the wireless communication system 100 may include multiple network devices, and in a coverage area of each network device, there may be other numbers of terminal devices, which is not limited in the embodiments of the present disclosure.

Optionally, the wireless communication system 100 may further include other network entities such as a network controller, a mobility management entity (MME), etc., which is not limited in the embodiments of the present disclosure.

It may be understood that, the technical solutions of the embodiments of the present disclosure may be applied to various communication systems, for example, a fifth generation (5G) system or new radio (NR), a long term evolution (LTE) system, an LTE frequency division duplex (FDD) system, an LTE time division duplex (TDD) system, etc. The technical solutions provided by the present disclosure may also be applied to future communication systems, such as sixth-generation (6G) mobile communication systems, satellite communication systems, and the like.

The terminal device in the embodiments of the present disclosure may also be referred to as user equipment (UE), access terminal, user unit, user station, mobile station (MS), mobile terminal (MT), remote station, remote terminal, mobile device, user terminal, terminal, wireless communication device, user agent, or user apparatus. The terminal device in the embodiments of the present disclosure may refer to a device that can provide voice and/or data connectivity for a user, and may be used to connect people, objects, and machines, such as handheld devices and vehicle-mounted devices with wireless connection functions, and so on. The terminal device in the embodiments of the present disclosure may be a mobile phone, tablet (Pad), laptop computer, handheld computer, mobile internet device (MID), wearable device, virtual reality (VR) device, augmented reality (AR) device, wireless terminal in industrial control, wireless terminal in self-driving, wireless terminal in remote medical surgery, wireless terminal in a smart grid, wireless terminal in transportation safety, wireless terminal in a smart city, wireless terminal in a smart home, etc. Optionally, the UE may serve as a base station. For example, the UE may serve as a scheduling entity to provide sidelink signals between UEs in vehicle-to-everything (V2X) or device-to-device (D2D). For example, a cellular phone and a vehicle may communicate with each other via sidelink signals. A cellular phone and a smart home device may communicate with each other without relaying communication signals through a base station.

The network device in the embodiments of the present disclosure may be a device that can communicate with the terminal device, and may also be referred to as an access network device or a radio access network (RAN) device, such as a base station. The network device in the embodiments of the present disclosure may be a RAN node (or device) that can connect the terminal device to a wireless network. The base station may broadly cover or be replaced with the following names, for example: NodeB, evolved NodeB (eNB), next generation NodeB (gNB), relay station, access point (AP), transmitting and receiving point (TRP), transmitting point (TP), master eNB (MeNB), secondary eNB (SeNB), multi-standard radio (MSR) node, home base station, network controller, access node, radio node, transmission node, transceiver node, base band unit (BBU), remote radio unit (RRU), active antenna unit (AAU), remote radio head (RRH), central unit (CU), distributed unit (DU), positioning node, etc. The base station may be a macro base station, a micro base station, a relay node, a donor node or the like, or a combination thereof. The base station may also refer to a communication module, modem, or chip disposed within the above devices or apparatuses. The base station may also be a mobile switching center and a device undertaking base station functions in D2D, V2X, machine-to-machine (M2M) communication, a network-side device in a 6G network, or a device undertaking base station functions in future communication systems. The base station may support networks of the same or different access technologies. The embodiments of the present disclosure are not limited to specific technologies or specific device forms used by the network device.

The base station may be fixed or mobile. For example, a helicopter or an unmanned aerial vehicle (UAV) may be configured to serve as a mobile base station, and one or more cells may move according to the location of the mobile base station. In other examples, a helicopter or a UAV may be configured as a device that can communicate with another base station.

In some deployments, the network device in the embodiments of the present disclosure may refer to a central unit (CU) or a distributed unit (DU), or the network device includes both a CU and a DU. The gNB may further include an active antenna unit (AAU).

The network device and the terminal device may be deployed on land, including indoor or outdoor, handheld or vehicle-mounted; may also be deployed on water; or may be deployed on aircraft, balloons, and satellites in the air. The embodiments of the present disclosure are not limited to the deployment scenarios of the network device and the terminal device.

It may be understood that, all or part of the functions of the communication devices in the present disclosure may also be implemented by software running on hardware, or implemented by virtualized functions instantiated on a platform (for example, a cloud platform).

With the development of artificial intelligence (AI) technology, AI models are introduced into more and more communication processes. For ease of understanding, AI models used in the communication processes are described below with reference to FIGS. 2 to 5.

### AI model-based channel estimation and signal recovery

Due to the complexity and time-variability of wireless channel environments, in a wireless communication system (for example, the wireless communication system described above), a receiver needs to recover a received signal(s) based on an estimated channel result(s). FIG. 2 is a schematic diagram illustrating channel estimation and signal recovery applicable to the embodiments of the present disclosure.

As illustrated in FIG. 2, in step S210, in addition to transmitting data signals on time-frequency resources, a transmitter also transmits a series of pilot signals known to a receiver, such as a channel state information-reference signal (CSI-RS) and a demodulation reference signal (DMRS).

In step S211, the transmitter transmits the above data signals and pilot signals to the transmitter through a channel.

In step S212, upon receiving the pilot signals, the receiver may perform channel estimation. In a possible embodiment, the receiver may estimate, based on a pre-stored pilot sequence and a received pilot sequence, channel information of the channel for transmitting the pilot signals through a channel estimation algorithm (for example, least squares method (LS) channel estimation).

In step S213, the receiver may recover, according to the channel information of the channel for transmitting the pilot sequence, channel information of the entire time-frequency resources using an interpolation algorithm, for subsequent CSI feedback or data recovery.

### AI model-based CSI feedback system

In a wireless communication system, a codebook-based scheme is mainly used to extract and feed back channel features, that is, after a receiver performs channel estimation, the receiver selects, according to a channel estimation result and an optimization criterion, a precoding matrix matching a current channel from a preset precoding codebook, and feeds back, through an air-interface feedback link, a precoding matrix index (PMI) to a transmitter for precoding. In some embodiments, the receiver may further feed back channel quality indication (CQI) measured by the receiver to the transmitter for adaptive modulation and coding.

FIG. 3 is a schematic diagram of an AI model-based CSI feedback system applicable to the embodiments of the present disclosure. As illustrated in FIG. 3, the entire feedback system includes an AI encoder 311 and an AI decoder 321 of an autoencoder, where the AI encoder 311 is deployed at a transmitter 310 and the AI decoder 321 is deployed at a receiver 320. The transmitter 310 compresses and encodes CSI to be transmitted through the AI encoder 311 to obtain compressed CSI. The compressed CSI is then fed back to the receiver 320 through a feedback link, and the receiver 320 decodes the compressed CSI through the AI decoder 321 to obtain recovered CSI. In this way, communication overhead for CSI feedback can be reduced without adversely affecting accuracy of CSI transmission.

### AI model-based positioning

In cellular-network-based wireless positioning, straight-line propagation of electromagnetic waves between a network device and a terminal device is referred to as line of sight (LOS) wireless propagation. In some cases, due to obstruction by buildings or trees, electromagnetic signals cannot be propagated in a straight line, which is commonly referred to as non-line of sight (NLOS) wireless propagation. Traditional positioning algorithms such as time difference of arrival (TDOA) and angle-of-arrival (AOA) are LOS channel-based and thus no longer applicable in environments where NLOS dominates. In most scenarios, the number of network devices having an LOS channel to a terminal device is usually small, resulting in accuracy of traditional positioning algorithms being unable to meet requirements for high-accuracy positioning. In addition, non-ideal factors may also exist in actual systems, which may further lower positioning accuracy.

Therefore, AI model-based high-accuracy positioning in LOS/NLOS channel coexistence scenarios is proposed. Some existing research results show that, based on massive channel data, a model can be trained by using machine learning methods to mine a mapping relationship between channel response and position coordinates, so as to solve the problem that traditional positioning algorithms cannot be applied in LOS/NLOS coexistence scenarios, thereby improving positioning accuracy.

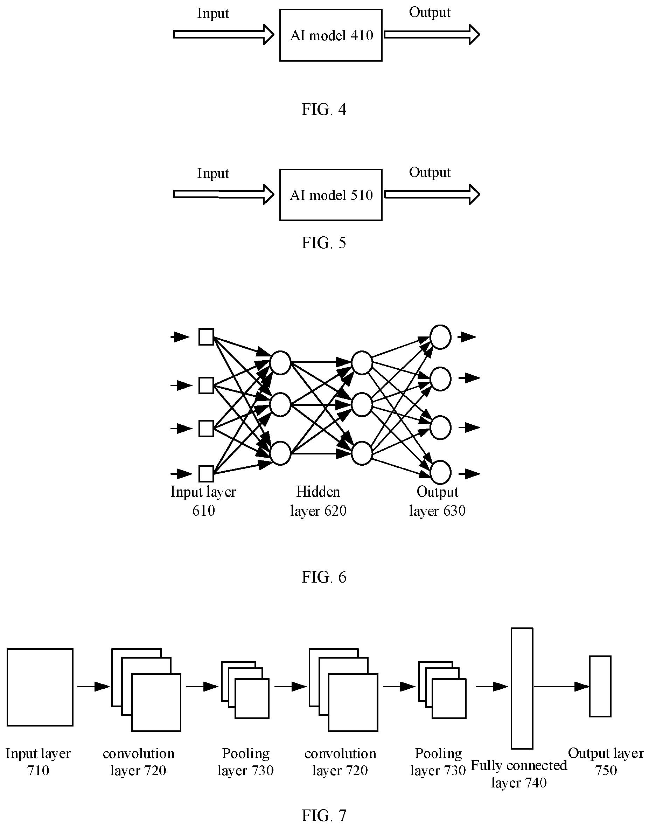

FIG. 4 is a schematic diagram of an AI model-based positioning scheme applicable to the embodiments of the present disclosure. As illustrated in FIG. 4, in a positioning scheme under LOS/NLOS channel coexistence scenarios implemented based on an AI model 410, a channel response may be used as input of the AI model 410, and a position coordinate may be used as output of the AI model 410. By learning the intrinsic relationship between a wireless channel and the position of the terminal device through the AI model 410, even in scenarios without sufficient LOS channels and/or scenarios with non-ideal conditions, the positioning scheme based on the AI model 410 can still output a position coordinate of the terminal device with relatively high accuracy, thereby helping meet high-accuracy positioning requirements.

The above introduces several communication processes that an AI model can be applied. The following describes AI models applicable to the embodiments of the present disclosure. It may be noted that, the AI models applicable to the embodiments of the present disclosure are not limited to AI models described below.

### AI model-based beam management

In traditional beam selection processes, it is usually required to traverse all combinations of receive beams and transmit beams to determine a proper beam. However, traversing all combinations requires a long period of time, resulting in relatively low efficiency of beam selection.

For example, assume that a network device deploys 64 different downlink transmission directions in frequency range 2 (FR2) (carried through up to 64 synchronization signal and physical broadcast channel blocks (SSB)). Accordingly, a terminal device may use one or more antenna panels to perform receive beam scanning simultaneously during reception, where each antenna panel has four receive beams. In this case, the terminal device needs to measure at least 256 beam pairs, meaning that a downlink resource overhead of 256 resources is required. From a time perspective, each SSB period is about 20 ms, and four SSB periods are required to complete measurement of four receive beams. Assuming multiple receive antenna panels can perform beam scanning simultaneously, at least 80 ms is required.

With the increase in the number of beams in future massive multiple-in multiple-out (MIMO) systems, in order to match optimal beam pairs, beam management schemes based on beam scanning will only lead to relatively large reference signal transmission overhead and beam scanning delay. Therefore, to avoid the above problems, AI model-based beam management is proposed in release 18 (R18). The AI model-based beam management scheme is described below with respect to a training process and prediction process of an AI model.

Assume that an AI model is used to predict available beams in beam set A. Correspondingly, in a training phase, beam measurement results of beam set *B* may be used as training data of the AI model, that is, the AI model is trained based on the beam measurement results of beam set *B,* such that the AI model may predict available beams from beam set *A.*

It may be noted that, the above beam measurement results of beam set *B* may include measurement results corresponding to layer 1 (L1) measurement quantities, and/or indication information of beams selected in beam set *B* (for example, transmit beam identifier, receive beam identifier, or beam pair identifier).

In some embodiments, the training data may further include label information of beam set *A,* where the label information indicates one or more of the following beams in beam set *A:* an optimal transmit beam, an optimal receive beam, an optimal beam pair, multiple preferred transmit beams, multiple preferred receive beams, and a preferred beam pair.

Referring to FIG. 5, in a prediction phase, input of an AI model 510 may include link quality measurement results corresponding to beams in beam set *A* (for example, L1 measurement quantities), and prediction results output by the AI model 510 may include a target beam selected from beam set *A*, and link quality corresponding to the target beam.

In some embodiments, the target beam may include one or more beams. As an example in which the target beam includes one beam, the target beam may be an optimal beam or a preferred beam in beam set *A.* As an example in which the target beam includes multiple beams, the target beam may include multiple beams that meet requirements in beam set *A,* where for each beam, meeting requirements may be understood as that link quality corresponding to the beam meets requirements, for example, the link quality corresponding to the beam is greater than or equal to a threshold.

In other implementations, the target beam may refer to one or more beam pairs, where each beam pair may include a receive beam or a transmit beam. As an example in which the target beam includes one beam pair, the target beam may be an optimal beam pair or a preferred beam pair in beam set *A.* As an example in which the target beam includes multiple beam pairs, the target beam may include multiple beam pairs that meet requirements in beam set A, where for each beam pair, meeting requirements may be understood as that link quality corresponding to the beam pair meets requirements, for example, the link quality corresponding to the beam pair is greater than or equal to a threshold.

It may be noted that, link quality in the embodiments of the present disclosure may be determined based on one or more measurement quantities described above. Of course, link quality in the embodiments of the present disclosure may also be determined based on other measurement quantities in future communication systems. The embodiments of the present disclosure are not limited thereto.

In addition, the case that link quality is determined based on one or more measurement quantities may be understood as that link quality is obtained through processing one or more measurement quantities. Of course, the link quality may also be the measurement quantities. The embodiments of the present disclosure are not limited thereto.

Further, if the prediction result only indicates one beam in a beam pair, the other beam in the beam pair may be determined in other ways. For example, the other beam may be determined through one or more of processes *P1 - P3* in traditional beam selection, or may be determined through one or more of processes *U1 - U3* in the traditional beam selection. The embodiments of the present disclosure are not limited thereto.

In some embodiments, beam set *B* may be different from beam set *A.* In some embodiments, beam set *B* may be a subset of beam set *A.* Accordingly, by measuring fewer beams (beams in beam set *B*)*,* prediction for more beams (beams in beam set *A*) may be achieved. Compared with the scheme based on traversing all combinations for beam selection introduced above, this helps to reduce time required for performing beam selection. Of course, in the embodiments of the present disclosure, beams in beam set *B* may be completely different from beams in beam set *A.* For example, there may be no intersection between beam set *B* and beam set *A,* but beam directions corresponding to beam set *B* may be similar to beam directions corresponding to beam set *A.*

In other implementations, beam set *B* may be exactly the same as beam *set A.*

The above describes communication procedures which the AI model is applicable with reference to FIGS. 2 - 5. The following describes the AI model applicable to the embodiments of the present disclosure with reference to FIGS. 6 to 7.

### AI Model

In recent years, AI research represented by neural networks has achieved remarkable results in many fields, and it is expected to play an important role in people's production and life for a long period of time in the future. A neural network can be understood as a computational model formed by interconnecting multiple neuron nodes, where the connections among nodes may represent weighted values from input signals to output signals, which are generally referred to as weights. Each node performs weighted summation on different input signals and outputs a result through a specific activation function.

Common neural networks include a convolutional neural network (CNN), a recurrent neural network (RNN), a deep neural network (DNN), and the like.

Below, the neural network applicable to the embodiments of the present disclosure is described with reference to FIG. 6. As illustrated in FIG. 6, the neural network may be divided into three types of layers according to their positions: an input layer 610, a hidden layer(s) 620, and an output layer 630. In general, the first layer is the input layer 610 and the last layer is the output layer 630, and an intermediate layer(s) between the first and last layers is hidden layer(s) 620.

The input layer 610 is configured to input data, where the input data may be a received signal received by a receiver. The hidden layer 620 is configured to process the input data, for example, to perform decompression processing on the received signal. The output layer 630 is configured to output processed output data, for example, to output the decompressed signal.

As illustrated in FIG. 6, the neural network includes multiple layers, each of which includes multiple neurons. The neurons between layers may be fully connected or partially connected. For connected neurons, the output of the neuron of the previous layer may serve as the input to the neuron of the next layer.

With the continuous development of neural network research, a deep learning algorithm for neural networks has been proposed in recent years, in which a considerable number of hidden layers are introduced into the neural network to form the DNN. With more hidden layers, the DNN is more capable of characterizing complex scenarios in the real world. Theoretically, as the number of parameters increases, the model complexity and "capacity" are higher, meaning that it can perform more complex learning tasks. Such neural network models are widely applied to pattern recognition, signal processing, combinatorial optimization, anomaly detection, and the like.

The CNN is a deep neural network with a convolutional structure. As illustrated in FIG. 7, the CNN may include an input layer 710, convolution layers 720, pooling layers 730, a fully connected layer 740, and an output layer 750.

Each convolution layer 720 may include multiple convolution operators, which are also referred to as kernels. They function as filters for extracting specific information from input signals, and each kernel may essentially be a weight matrix that is generally predefined.

In practical applications, weight values in these weight matrices need to be obtained through substantial training. Weight matrices generated based on trained weight values can extract information from input signals, thereby helping the CNN make correct predictions.

When the CNN includes multiple convolution layers, the initial convolution layers generally extract more general features, also referred to as low-level features. As the CNN becomes deeper, the features extracted by subsequent convolution layers become more complex.

Since it is often necessary to reduce the number of training parameters, the pooling layer 730 is periodically introduced after the convolution layer. For example, as illustrated in FIG. 7, a pooling layer may follow a convolution layer, or one or more pooling layers may also follow multiple convolution layers. During signal processing, the single purpose of the pooling layer is to reduce the spatial size of extracted information.

After processing by the convolution layer 720 and the pooling layer 730, the CNN still cannot output required output information. As mentioned above, the convolution layer 720 and the pooling layer 730 can only extract features and reduce the number of parameters introduced by the input data. However, in order to generate final output information (for example, a bit stream representing original information transmitted from a transmitter), the CNN further requires the fully connected layer 740. Typically, the fully connected layer 740 may include multiple hidden layers, and parameters in the multiple hidden layers may be obtained in advance through pre-training based on training data of specific task types. For example, the task type may include decoding data signals received by the receiver. For another example, the task type may include performing channel estimation based on pilot signals received by the receiver.

After the multiple hidden layers of the fully connected layer 740, the final layer of the CNN is the output layer 750 for outputting results. Typically, a loss function (for example, a loss function similar to classification cross entropy) is configured in the output layer 750 to compute prediction errors, that is, to evaluate a degree of difference between an output result (also referred to as a predicted value) of the CNN model and an ideal result (also referred to as a true value).

In order to minimize the loss function, the CNN model needs to be trained. In some embodiments, a backpropagation (BP) algorithm may be used to train the CNN model. A training process of BP includes a forward propagation process and a backward propagation process. During forward propagation (i.e., propagation from 710 to 750 in FIG. 7), input data is input into each layer of the CNN model, processed layer by layer, and propagated to the output layer. If an output result at the output layer differs significantly from an ideal result, minimizing the above loss function is taken as the optimization objective, and the training process enters backward propagation (i.e., propagation from 750 to 710 in FIG. 7). In backward propagation, partial derivatives of the optimization objective with respect to weights of respective neurons are calculated layer by layer to form a gradient of the optimization objective with respect to a weight vector, which serves as a basis for modifying model weights. The training process of the CNN is completed in the weight modifying process. When the above error reaches an expected value, the training process of the CNN model ends.

It may be noted that, the CNN illustrated in FIG. 7 is merely an example of a convolutional neural network. In actual applications, the CNN may exist in other network model forms, and the embodiments of the present disclosure are not limited thereto.

RNNs are intended to process sequential data. In traditional neural network models (for example, the CNN model), data is propagated from the input layer to the hidden layer and then to the output layer. Layers are fully connected, and nodes within each layer are not connected to each other. However, such ordinary neural networks are incapable of dealing with many problems. For example, since words in a sentence are not independent of each other, when predicting a next word of a sentence, preceding words are typically needed. An RNN is termed a recurrent neural network because the current output of a sequence is related to previous outputs. In practice, the network memorizes previous information and applies the memorized information to the calculation of current output. That is, nodes among hidden layers are no longer unconnected but are connected, and input to the hidden layer includes not only output of the input layer but also output of the hidden layer at a previous time instant. Theoretically, RNNs are capable of processing sequential data of any length.

Training of an RNN is similar to training of a traditional artificial neural network (ANN). The BP algorithm is also used for backpropagation, but with certain differences. If an RNN is unfolded, parameters *W, U,* and *V* are shared, whereas such parameters are not shared in a conventional neural network. In addition, when a gradient descent algorithm is applied, an output at each step depends not only on a network at the current step but also on states of the network at previous multiple steps. For example, at time t = 4, backward propagation needs to be performed for previous three steps, and gradients corresponding to those three steps needs to be accumulated. Such a learning algorithm is referred to as back propagation through time (BPTT) algorithm.

Although artificial neural networks and CNNs have been proposed, RNNs are still required. This is because both CNNs and artificial neural networks generally assume that elements are independent of each other, and inputs and outputs are independent of each other, for example, a cat and a dog. However, in the real world, many elements are connected with each other. For example, stock prices vary over time, or in a sentence like "I like traveling, and my favorite place is Yunnan. I will definitely go to_ f I have the chance." People naturally fill in "Yunnan" based on context, but machines find this difficult. Therefore, the RNN is introduced. Its essence is that it has memory like humans, so its output depends on the current input and memory.

### Model Training

In current academic research and in studies conducted by international standardization organization 3rd generation partnership project (3GPP), research on models applied to communication systems mainly focuses on model design and use of trained models. With respect to a model training stage, it is generally assumed that a model can be pre-trained through offline training. For example, it is assumed that a model has been trained in advance in an offline manner for standby use. However, deploying a pre-trained model in different scenarios and different environments to address different problems is inherently challenging in terms of engineering and implementation. In other words, it is difficult to pre-train a single model that is capable of solving all problems. On the other hand, it is also difficult to prepare model-based solutions in advance for various problems in wireless communication. In this case, constructing a model on demand in a non-offline manner becomes particularly important.

Generally, a model construction process involves two stages: a training stage and an inference stage. The purpose of the training stage is to enable a training device to complete training of a specific model based on a specific dataset. Thereafter, in the inference stage, the trained model may be used to perform inference. In current 3GPP discussions, one-sided models, two-sided models, online training, and offline training are mainly involved, which are respectively described below.

A one-sided model refers to a model that is used at a communication device. Since the model is used separately at a communication device, it can be understood that the model is used at a side of the communication device, and therefore, such a model may also be referred to as a "one-sided model." The communication device may be, for example, a terminal device or a network device. For instance, the AI model 410 described above may be deployed at a network device to perform positioning for a terminal device, and thus serves as an example of a one-sided model.

A two-sided model refers to a model respectively deployed in communication devices that can communicate with each other, where the models deployed in the communication devices that can communication with each other need to collaborate. Since such models are respectively deployed at two communication devices that can communicate with each other and need to collaborate, such models may also be referred to as "two-sided model." For example, the AI model encoder and the AI model decoder described above need to be respectively deployed at a transmitting end and a receiving end, and the AI model encoder and the AI model decoder respectively deployed at the transmitting end and the receiving end need to collaborate. Therefore, the AI model encoder and the AI model decoder may serve as an example of a two-sided model.

In some scenarios, collaboration of the above two-sided models may be understood as performing joint inference by the two-sided models through collaboration. The joint inference is jointly performed by devices that can communicate with each other, that is, one device first performs a first part of inference, and another device performs remaining part of the inference.

Offline training refers to training in which there is no need to interact with the external environment in real time during data collection and model training. During offline training, data can be collected in advance and then is pre-processed, and a model can be trained in an environment with sufficient computing resources. Generally, a model trained offline is used for inference after a certain period of time and does not immediately enter an inference stage.

At present, in current academic research and the studies conducted by the international standardization organization 3GPP, research on wireless AI/machine learning (ML) mainly focuses on model design and on how to use a trained model. With respect to model training, it is generally assumed that a model can be trained, for example, assuming that a model has been trained offline. However, due to that training data cannot cover all communication scenarios, a model trained offline is typically unable to adapt to all communication scenarios. In this case, training a model online becomes particularly important.

Online training refers to a training process in which a deployed and operating model is continuously adjusted (or updated) based on data collected in real time. In other words, the model is trained based on data collected in real time and is used in (near) real time. Online training can timely respond to change in new data, allowing the model to continuously adapt to new situations and variations, thereby improving the accuracy and performance of the model.

In some embodiments, model training of a two-sided model may be classified into three types according to different training manners, which are described below with reference to Type 1 through Type 3.

Type 1: model training for a two-sided model is performed at a single side. In this model training, the side that performs model training may transfer a model that is to be deployed at the opposite side (referred to as the opposite-side model) in the trained two-sided model to the opposite side. In this case, the opposite side may directly use the transferred opposite-side model without performing model training.

Type 2: the two-sided model is trained by devices that communicate with each other, respectively. Therefore, this model training may also be referred to as "two-sided training," or the two-sided model is trained successively by devices that communicate with each other. For example, the two-sided model includes model 1 deployed in device 1 and model 2 deployed in device 2. Device 1 may first train model 1, and after the training of model 1, device 1 may transmit data for training model 2 to device 2. Correspondingly, device 2 may train model 2 based on the data. The device that trains a model first (e.g., device 1) may be referred to as a "prior-training device", and the device that trains a model later (e.g., device 2) may be referred to as the "post-training device."

As an example by referring to the AI encoder 311 and the AI decoder 321 described above with reference to FIG. 3, the AI encoder 311 is deployed at the transmitting end and the AI decoder 321 is deployed at the receiving end. Correspondingly, Type 2 may be used to train the AI encoder 311 and the AI decoder 321 separately.

Type 3: A two-sided model is jointly trained by devices that communicate with each other. Therefore, this model training can also be referred to as "two-sided training." Assume that the two-sided model includes model 1 deployed in device 1 and model 2 deployed in device 2. The output of model 1 in device 1 may serve as the input of model 2 in device 2, and then model 1 and model 2 may be jointly trained based on the output of model 2.

As an example by referring to the AI encoder 311 and the AI decoder 321 described above with reference to FIG. 3, the AI encoder 311 is deployed at the transmitting end and the AI decoder 321 is deployed at the receiving end. Correspondingly, Type 3 may be used to jointly train the AI encoder 311 and the AI decoder 321.

In some embodiments, training results of model training of Type 3 may include one or more of the following: a trained model deployed at the first device, and/or a trained model deployed at the second device.

As introduced above, in actual communication systems, solutions for model-based communication issues have been introduced. That is, devices participating in communication may perform communication based on their respective models. As the coverage of communication systems continues to expand, multiple types of devices are introduced into the communication system, for example, terminal devices, terminal servers, network devices, network servers, etc. Different devices may have different model-related capabilities, or in other words, may support models to different extents. If the model-related capabilities of devices are treated uniformly, model-based communication between devices may fail. For ease of understanding, the following describes examples where the capabilities related to model training differ between different devices.

In some scenarios, different devices support different types of model training. Assume that device 1 supports model training of Type 1, and device 2 supports model training of Type 2. In this case, device 1 cannot participate in model training of Type 2, that is, device 1 cannot cooperate with device 2 to complete model training of Type 2, which may result in poor accuracy of inference of a model in device 2, or even prevent a model in device 2 from entering an inference stage. Therefore, device 1 and device 2 cannot communicate with each other based on their respective deployed models.

In other scenarios, different devices support different model structures for model training. Assume that device 1 supports model training for model structure 1, and device 2 supports model training for model structure 2. In this case, a dataset transmitted by device 2 to device 1 for model training may not be applicable to model training in device 1, so device 1 and device 2 cannot communicate with each other based on their respective deployed models.

In other scenarios, different devices support the same model training process to different extents. For example, for the same model training process, different devices may have different computational resources available for model training. As another example, for the same model training process, different devices may have different power consumption constraints for model training. As another example, different devices may support different latency, and due to latency constraints supported by different devices, even for the same model training process, the time available for model training may differ. As still another example, different devices may support different software and hardware, and due to software and hardware constraints in different devices, different devices may support different types of model training. Therefore, because devices differ in their degree of support for the same model training process, devices may fail to cooperate with each other to complete model training, and consequently may not be able to communicate with each other based on trained models.

The applicant has found that the root cause of the above problem lies in the difference in model-related capabilities between different devices, and in that devices performing model-based communication are unable to obtain capability information of each other. As a result, model-related capabilities of devices can only be treated in a generalized manner, which in turn leads to failures of model-based communication between devices.

Therefore, to address the above problem, the embodiments of the present disclosure provide a method for wireless communication. In the method, a first device may send model-related capability information to a second device to inform the second device of capability information of the first device. Compared with the traditional solution in which the first device and the second device cannot obtain capability information of each other, the method helps the second device to acquire the capability information of the first device, so as to select a task matching the capability information (for example, a model training task, a model updating task, a model parameter fine-tuning task, a model deployment task, a model compiling task, etc.) to be performed by the first device, thereby improving the likelihood of model-based communication between the first device and the second device.

It may be noted that, in some embodiments, the above model may be an AI model, for example, any of the AI models described above with reference to FIG. 2 to FIG. 5. Of course, the model may also be a model newly introduced in a future communication system. In other embodiments, the above model may be an ML model.

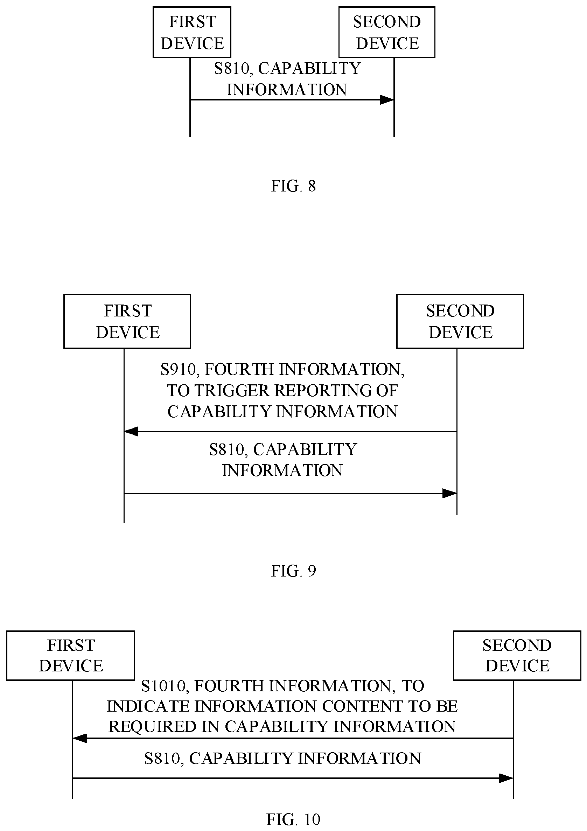

A method for wireless communication according to embodiments of the present disclosure is described below with reference to a flow chart illustrated in FIG. 8. The method as illustrated in FIG. 8 includes step S810.

In step S810, a first device sends capability information of the first device to a second device.

In some embodiments, the capability information of the first device may be at a device level. That is, the capability information of the first device is applicable to the entire device, and is not distinguished for different model use cases. In this case, capability information for different model use cases may be indicated together, or capability information for different model use cases may be determined together.

In other embodiments, the capability information of the first device may be at a model use case level. That is, the capability information of the first device may be specific for a model use case. In this case, capability information for different model use cases may be indicated separately, or capability information for different model use cases may be determined separately.

For example, the first device may be deployed with model use case 1 for beam management and model use case 2 for CSI information compression. In this case, capability information associated with model use case 1 and capability information associated with model use case 2 in the first device may be determined separately and transmitted separately.

In some embodiments, the first device may be associated with multiple model use cases, and capability information for part or all of the multiple model use cases may be different. Of course, in the embodiments of the present disclosure, capability information for different model use cases among the multiple model use cases may be the same.

In some embodiments, the above capability information is associated with one or more of: model training, model compilation, and model deployment. The following describes Example 1 to Example 3 respectively.

### Example 1: the capability information is associated with model training.

In some embodiments, the capability information may include one or more of first information, second information, and third information. The following describes Example 1-1 to Example 1-3 respectively.

### Example 1-1: the capability information includes the first information.

In some embodiments, the first information indicates whether the first device supports model training.

In some embodiments, the first information may occupy one bit in the capability information, which is beneficial to reducing overhead for transmitting the first information. In this case, when a value of the bit is a first value, the bit may indicate that the first device supports model training. When a value of the bit is a second value, the bit may indicate that the first device does not support model training. The first value may be different from the second value. For example, the first value may be 1 and the second value may be 0. For another example, the first value may be 0 and the second value may be 1. Of course, in the embodiments of the present disclosure, multiple bits may be used to carry the first information.

Generally, compared with a model inference phase, requirements in terms of computation, storage, and power consumption in a model training phase are far higher. Therefore, a device that supports model inference may not necessarily support model training. In the embodiments of the present disclosure, the first device may transmit the first information to the second device to indicate whether the first device supports model training, which helps improve the possibility of model-based communication between the first device and the second device.

### Example 1-2: the capability information includes the second information.

In some embodiments, the second information indicates a training type of model training that is supported by the first device. The training type of model training may include one or more of: online training, and model training types (Type 1- Type 3) for two-sided model training. For the detailed illustration, reference may be made to model training described above. For brevity, details are not repeated here.

In some embodiments, in a case where the training type of model training includes online training, the second information further includes one or more of: information indicating whether the first device supports online training; information indicating a duration supported by the first device for online training; information indicating a training complexity of online training that is supported by the first device; and information indicating a data volume of data supported by the first device for online training.

In embodiments of the present disclosure, refining the content of the second information for online training helps the second device determine online training that the first device can participate in, which is beneficial for avoiding that the second device indicates participation of the first device in online training not supported by the first device, thereby improving rationality of the second device indicating participation of the first device in model training.

In the case where the second information includes the information indicating whether the first device supports online training, the information may occupy one bit in the second information, which helps reduce overhead for transmitting the second information. In this case, when a value of the bit is a first value, the bit may indicate that the first device supports online training. When the value of the bit is a second value, the bit may indicate that the first device does not support online training. The first value may be different from the second value. For example, the first value may be 1 and the second value may be 0. For another example, the first value may be 0 and the second value may be 1. Of course, in the embodiments of the present disclosure, multiple bits may be used to carry the information.

In some embodiments, in the case where the second information includes the information indicating the duration, within the duration, the first device may occupy all the duration for performing online training or may occupy part of the duration for performing online training.

In some scenarios, online training supported by the first device may be subject to a duration constraint. For example, the computing capability of the first device may only support online training within a certain duration. For another example, a usage status of the first device may indicate that the first device only supports online training within a certain duration. Therefore, in the embodiments of the present disclosure, the duration may be indicated via the second information so that the second device can select appropriate model training for the first device.

In some embodiments, the duration may be determined based on a reference model. For example, a training time for performing online training on the reference model by the first device may serve as the duration. In other embodiments, the duration may be determined based on a reference training complexity. For example, under the reference training complexity, a training time for performing online training by the first device may serve as the duration.

In embodiments of the present disclosure, a specific value of the duration is not limited. For example, the value of the duration may include one or more of: 10 ms, 50 ms, 100 ms, 1 s, 2 s, 5 s, 10 s, 1 minute, 2 minutes, 5 minutes, 10 minutes, and 30 minutes.

In some embodiments, in the case where the second information includes the information indicating the training complexity, the training complexity may be understood as computing resources and time required during online training. Generally, the training complexity may be determined by several factors, including: data volume, model complexity, training algorithm, and computing resources.

In some scenarios, online training supported by the first device may be subject to a training complexity constraint. For example, the computing capability of the first device may only support model training within a certain training complexity. Therefore, in the embodiments of the present disclosure, the training complexity may be indicated via the second information so that the second device can select appropriate model training for the first device.

In some embodiments, in the case where the second information includes the information indicating the data volume of data available for online training, the data available for online training may include one or more of: training data, validation data, test data, metadata, and prior knowledge data. Of course, in the embodiments of the present disclosure, other data may also be included.

In some scenarios, online training supported by the first device may be subject to a data volume constraint. For example, the computing capability of the first device may only support model training within a certain data volume. Therefore, in the embodiments of the present disclosure, the data volume may be indicated via the second information so that the second device can select appropriate model training for the first device.

In some embodiments, the data volume of data available for online training may be determined based on a reference model. For example, a data volume of data used by the first device for performing online training on the reference model may serve as the data volume of data available for online training. In other embodiments, the data volume of data available for online training may be determined based on a reference training complexity. For example, under the reference training complexity, a data volume of data used by the first device for performing online training may serve as the data volume of data available for online training.

In embodiments of the present disclosure, a specific value of the data volume is not limited. In some embodiments, the data volume may be indicated via *N* samples, where a value of *N* includes one or more of: 1, 2, 5, 10, 20, 50, and 100. In other embodiments, the data volume may be indicated via a data size, where a value of the data size includes one or more of: 100 bytes, 1 KB, and 1 MB.

Based on the above illustration, online training may vary in terms of duration, training complexity, data volume, etc. Therefore, a constraint condition(s) for online training may be set in combination with the foregoing factors. For example, for the first device, the first device can perform online training that meets a constraint condition(s) indicated via the second information.

In some scenarios, online training may be classified into multiple types based on different constraint conditions for online training. Among multiple types of online training, different types of online training may be associated with different constraint conditions, or in other words, different types of online training may be associated with different second information. Of course, in the embodiments of the present disclosure, the constraint conditions may also be determined based on other information. In some embodiments, a usage condition(s) of a model may be combined with one or more of the above constraint conditions to form new constraint conditions for classifying online training. Certainly, in the embodiments of the present disclosure, a usage condition(s) of a model may be used separately to specify a constraint condition(s).

In some embodiments, a usage condition of a model may also be referred to as a deployment usage condition of the model. The deployment usage condition may include one or more of: hardware condition, software condition, and data condition. The hardware condition may be understood as hardware resource support required for deployment and usage of a model. For example, the hardware resource support may include a processor, a memory, a storage space, and the like. The software condition may be understood as software environment support required for deployment and usage of a model, for example, the software environment may include operating systems, development tools, and dependent libraries. The data condition may be understood as data quality of relevant data (such as training data and test data) required for deployment and usage of a model, where the training data is used to train the model and the test data is used to evaluate performance of the model, and the data quality directly affects accuracy and effectiveness of the model.

In the embodiments of the present disclosure, the duration, the training complexity, and the data volume may be used separately as a constraint condition for online training. Certainly, the duration, the training complexity, and the data volume may be combined as a constraint condition for online training. The following describes a constraint condition formed by combining the training complexity with the duration, and a constraint condition formed by combining the training complexity with the data volume.

For example, if the training complexity of online training is reference complexity 1, and the online training can be completed within time *t_1*, that is, the duration of the online training is *t_1*, then the online training belongs to a first type. If the training complexity of online training is reference complexity 1, and the online training can be completed within time *t_k,* that is, the duration of the online training is *t_1,* then the online training belongs to a second type.

As another example, if the training complexity of online training is reference complexity 2, and the online training can be completed based on a dataset of data volume *N_1,* then the online training belongs to a third type. If the training complexity of online training is reference complexity 2, and the online training can be completed based on a dataset of data volume *N_p*, then the online training belongs to a fourth type.

In some embodiments, the second information may indicate a constraint condition for the first device to perform online training by carrying type indication information of online training. For example, the second information may carry a type identifier of online training to indicate a constraint condition for the first device to perform online training. Of course, in the embodiments of the present disclosure, the second information may directly carry the above constraint condition.

For instance, in the case where online training performed by the first device belongs to the first type, the first device may send the second information to the second device. In some embodiments, the second information may carry a type identifier of the first type, where the type identifier of the first type indicates that if a training complexity of online training is reference complexity 1, then a duration supported by the first device for online training is *t_1.* In other embodiments, the second information may carry a constraint condition associated with the first device, i.e., if a training complexity of online training is reference complexity 1, the duration supported by the first device for online training is *t_1.*

As another example, in the case where online training performed by the first device belongs to the third type, the first device may send the second information to the second device. In some embodiments, the second information may carry a type identifier of the third type, where the type identifier of the third type indicates that if a complexity of online training is reference complexity 2, the first device can complete online training based on a dataset of data volume N 1. In other embodiments, the second information may carry a constraint condition associated with the third type, i.e., if a complexity of online training is reference complexity 2, the first device can complete online training based on the dataset of data volume *N_1.*

As described above, a constraint condition for online training may be determined based on the type of the online training. That is, a mapping relationship exists between constraint conditions for online training and types of online training. Accordingly, a constraint condition associated with the type of online training indicated in the second information may be determined based on the mapping relationship and the type of online training indicated in the second information.

In the embodiments of the present disclosure, the manner of obtaining the mapping relationship is not limited. In some embodiments, the mapping relationship may be determined based on predefined or preconfigured information. In other embodiments, the mapping relationship may be defined by the first device and sent to the second device. In still other embodiments, the mapping relationship may be defined by the second device and sent to the first device.

In some embodiments, in the case where the training type of model training includes two-sided training, the second information may include one or more of the following: information indicating whether the first device supports two-sided training; information indicating a training device for performing two-sided training; information indicating a training type of two-sided training that is supported by the first device; information indicating whether the first device supports data transmission required for performing two-sided training; information indicating whether the first device supports data generation required for performing two-sided training; information indicating whether the first device supports data reception required for performing two-sided training; information indicating whether the first device supports data processing required for performing two-sided training; information indicating whether the first device supports two-sided training initiated by the first device; information indicating whether the first device supports two-sided training initiated by the second device.

In the embodiments of the present disclosure, refining the information content of the second information for two-sided training can help the second device determine, based on the second information, two-sided training that the first device can participate, which helps avoid the second device indicating participation of the first device in two-sided training that the first device does not support, thereby improving the rationality of the second device indicating participation of the first device in model training.

In the case where the second information includes the information indicating whether the first device supports two-sided training, such information may occupy one bit in the second information, which helps reduce overhead for transmitting the second information. In this case, if a value of the bit is a first value, the bit indicates that the first device supports two-sided training. If the value of the bit is a second value, the bit indicates that the first device does not support two-sided training. The first value may be different from the second value. For example, the first value may be 1 and the second value may be 0. For another example, the first value may be 1 and the second value may be 0. Of course, multiple bits may also be used to carry such information.

In the case where the second information includes the information indicating a training device for performing two-sided training, then in some embodiments, the training device includes the first device, that is, the first device may participate in two-sided training. In other embodiments, the training device may include a target device associated with the first device, that is, the target device may perform two-sided training instead of the first device and then transfer a trained model to the first device.

In the embodiments of the present disclosure, the target device is not limited. For example, the target device may be an external device associated with the first device, such as a server or another device capable of model training.

In the case where the second information includes the information indicating a training type of two-sided training that is supported by the first device, the training type of two-sided training may include one or more of the following: multiple devices separately performing model training for multiple models (i.e., Type 2 described above); multiple devices jointly training multiple models (i.e., Type 3 described above).

In the case where the second information includes the information indicating whether the first device supports data transmission required for performing two-sided training, then in some embodiments, if two-sided training refers to that multiple devices jointly perform model training for multiple models (Type 3 described above), data transmission involved in two-sided training may include transmission of one or more of: model parameters required for two-sided training; model gradient data required for two-sided training; quantized model data required for two-sided training. Such data transmission required for two-sided training may be referred to as data transmission required for two-sided training of Type 3.

In other embodiments, devices participating in training of Type 2 include device 1 and device 2, and a model participating in two-sided training in device 2 may be transferred by device 1 to device 2. Therefore, in the embodiments of the present disclosure, data transmission for two-sided training of Type 2 may include transmitting a model required for two-sided training. In this case, data transmission required for two-sided training may be referred to as data transmission required for two-sided training of Type 2. Certainly, in other scenarios, a model participating in two-sided training may also be preconfigured or predefined, and in this case, data transmission required for two-sided training of Type 2 may no longer be transmitted via the second information.

In the embodiments of the present disclosure, different data transmission capabilities may be reported for different types of two-sided training, which helps improve the accuracy of obtaining capability information of the first device by the second device, so as to determine whether the first device can perform two-sided training with the second device.

In the embodiments of the present disclosure, the content in the second information may be distinguished not only based on the type of two-sided training, but also based on an order in which devices perform model training of two-sided training of Type 3. The following describes the scenario where multiple devices respectively complete model training for multiple models as an example.

In some embodiments, the second information includes one or more of the following: the information indicating whether the first device supports data reception required for performing two-sided training; information indicating whether the first device supports data processing required for performing two-sided training.

Based on two-sided training of Type 2 described above, a device that performs later training needs to receive data used for model training from a device that performs earlier training and/or process data used for model training. That is, a device having one or more of the above capabilities may serve as a device that performs later training of two-sided training of Type 2. Therefore, in the embodiments of the present disclosure, the first device may send the second information to the second device, so that the second device may determine whether the first device can serve as a device that performs later training.

In some embodiments, the second information includes one or more of the following: the information indicating whether the first device supports data generation required for performing two-sided training; the information indicating whether the first device supports data transmission required for performing two-sided training.

In some embodiments, the data required for two-sided training may be data required for performing model training by the device that performs later training of two-sided training of Type 2. For example, the data required for two-sided training may include a training dataset.

Based on two-sided training of Type 2 described above, the device that performs earlier training needs to generate data used for model training and send the data to the device that performs later training. That is, a device having one or more of the above capabilities may serve as a device that performs earlier training of two-sided training of Type 2. Therefore, in the embodiments of the present disclosure, the first device may send the second information to the second device, so that the second device may determine whether the first device can serve as a device that performs earlier training.

It may be noted that, if the first device only supports generation of data required for two-sided training and transmission of data required for two-sided training, and the first device does not support reception of data required for two-sided training and processing of data required for two-sided training, then the first device is unable to perform two-sided training of Type 2. That is, even if the first device has obtained data required for training from another device, the first device still cannot complete a two-sided training task.

In some embodiments, in the case where two-sided training refers to that multiple devices respectively complete model training for multiple models (i.e., two-sided training of Type 2 introduced above), the second information includes one or more of the following: the information indicating whether two-sided training initiated by the first device is supported; and the information indicating whether two-sided training initiated by the second device is supported. That is, the second information indicates an initiation manner of two-sided training supported by the first device, where the initiation manner include being initiated by the first device and/or being initiated by the second device.

In some embodiments, the case that the first device initiates two-sided training may include that the first device can serve as a device that performs earlier training as described above. For example, the case that the first device initiates two-sided training may include that the first device can perform model training, i.e., model training performed by the first device in two-sided training. As another example, the case that the first device initiates two-sided training may include that the first device can transmit data required for two-sided training to the second device for model training, i.e., model training performed by the second device in two-sided training.

Based on the illustration above, the case that the first device supports two-sided training initiated by the first device can be understood as that the first device has the capability of a device that performs earlier training, for example, the first device supports generation of data required for two-sided training and/or supports transmission of data required for two-sided training.

In some embodiments, the case that the second device initiates two-sided training may include that the second device can serve as a device that performs earlier training as described above. For example, the case that the second device initiates two-sided training may include that the second device can perform model training, i.e., model training performed by the second device in two-sided training. As another example, the case that the second device initiates two-sided training may include that the second device can transmit data required for two-sided training to the first device for model training, i.e., model training performed by the first device in two-sided training.

Based on the illustration above, the case that two-sided training initiated by the second device is supported can be understood that the first device has the capability of a device that performs later training as described above, for example, the first device supports data reception required for performing two-sided training and/or supports data processing required for performing two-sided training.

It may be understood that, the above merely exemplarily lists the information content carried in the second information, and the embodiments of the present disclosure do not place specific constraints on the second information. In some embodiments, the second information may further indicate whether the first device supports distributed model training, where distributed model training refers to a manner in which model training is performed concurrently at multiple devices. It can accelerate model training and handle large-scale datasets. In other embodiments, the second information may further indicate whether the first device supports federated learning, where federated learning aims to achieve collective model learning by performing training and inference at local devices without transmitting data from user devices to a central server.

In some embodiments, the two-sided training described above is one of multiple types of two-sided training, and among multiple types of two-sided training, different types of two-sided training are associated with different second information.

In some embodiments, two-sided training of Type 2 may be classified into multiple manners based on the second information corresponding to the device that performs earlier training and the second information corresponding to the device that performs later training. For example, two-sided training of Type 2 may include Manner 1 to Manner 3. A device corresponding to Manner 1 can support data reception required for performing two-sided training and data processing required for performing two-sided training. A device corresponding to Manner 2 can support data reception required for performing two-sided training and data processing required for performing two-sided training. A device corresponding to Manner 3 can support data reception required for performing two-sided training, data processing required for performing two-sided training, data reception required for performing two-sided training, and data processing required for performing two-sided training.

Accordingly, for Manner 1, the second information may include information indicating whether data reception required for two-sided training is supported and information indicating whether data processing required for two-sided training is supported.

For Manner 2, the second information may include information indicating whether data reception required for two-sided training is supported and information indicating whether data processing required for two-sided training is supported.

For Manner 3, the second information may include: information indicating whether data reception required for two-sided training is supported; information indicating whether data processing required for two-sided training is supported; information indicating whether data reception required for two-sided training is supported; and information indicating whether data processing required for two-sided training is supported.

In other embodiments of the present disclosure, two-sided training of Type 3 may be classified into multiple types based on whether data transmission required for two-sided training is supported and a training device that performs two-sided training. For example, two-sided training of Type 2 may include Manner 1 and Manner 2. A device corresponding to Manner 1 can support data transmission required for two-sided training, and the training device is the device itself. A device corresponding to Manner 2 can support data transmission required for two-sided training, and the training device is a target device associated with the device.

Accordingly, for Manner 1, the second information may include information indicating that data transmission required for two-sided training is supported and that the training device is the device itself.

For Manner 2, the second information may include information indicating that data transmission required for two-sided training is supported and that the training device is a target device.

In other embodiments, two-sided training of Type 2 may be classified into multiple manners based on different initiation manners of two-sided training supported by the first device. For example, two-sided training of Type 2 may include Manner 1 to Manner 3. The first device corresponding to Manner 1 can support two-sided training initiated by the first device. The first device corresponding to Manner 2 can support two-sided training initiated by the second device. A device corresponding to Manner 3 can support both two-sided training initiated by the first device and two-sided training initiated by the second device.

Accordingly, for Manner 1, the second information may include information indicating that the first device supports two-sided training initiated by the first device. For Manner 2, the second information may include information indicating that the first device supports two-sided training initiated by the second device. For Manner 3, the second information may include information indicating that the first device supports two-sided training initiated by the second device, and information indicating that the first device supports two-sided training initiated by the first device.

In other embodiments of the present disclosure, two-sided training of Type 3 may be classified into multiple manners based on data transmission required for two-sided training that is supported by the first device and based on a training device that performs two-sided training. For example, two-sided training of Type 3 may include Manner 1 and Manner 2. The first device corresponding to Manner 1 can support data transmission required for two-sided training of Type 3, and the training device is the first device itself. The first device corresponding to Manner 2 can support data transmission required for two-sided training of Type 3, and the training device is a target device.

Accordingly, for Manner 1, the second information may include information indicating that the first device supports data transmission required for two-sided training of Type 3, and information indicating that the training device is the first device itself. For Manner 2, the second information may include information indicating that the first device supports data transmission required for two-sided training of Type 3, and information indicating that the training device is a target device.

### Example 1 - 3: the capability information includes the third information.

In some embodiments of the present disclosure, a first condition indicated by the third information may be a constraint condition for the first device to perform model training, that is, the first device supports model training that meets the first condition. Accordingly, the first device may be unable to perform model training that does not meet the first condition.

In some embodiments, the first condition may be associated with one or more of the following: a model-use-case use case type; a model type; a model size; a data volume of data for model training; computing capability for data for model training; time for model training; and software information for model training.

Taking that the first condition is associated with a model-use-case use case type as an example, in some embodiments, the first condition may indicate a use case type constraint that is supported by the first device for model training. Of course, in embodiments of the present disclosure, the first condition may indicate a use case type constraint that is not supported by the first device for model training.

The model-use-case use case type mentioned above indicates an application scenario and function of a model. For example, a model use case may describe input and output of a model, and how a model is applied in a specific scenario and an expected result of the model in the specific scenario.

In some embodiments, the model-use-case use case type may include one or more of the following: a model use case for channel state information (CSI) feedback; a model use case for CSI prediction; a model use case for beam management; a model use case for beam prediction; a model use case for positioning; a model use case for channel estimation; a model use case for symbol detection; a model use case for mobility management; a model use case for resource management; a model use case for encoding and decoding; a model use case for modulation and demodulation; and a model use case for waveform adjustment.

For example, the first condition may indicate that the model-use-case use case type that is supported by the first device for model training is the model use case for CSI feedback. That is, the first device can perform model training for the model use case for CSI feedback, but cannot perform model training for other model use case types except for the model use case for CSI feedback.

Taking that the first condition is associated with a model type as an example, in some embodiments, the first condition may indicate a model type constraint that is supported by the first device for model training. Of course, in embodiments of the present disclosure, the first condition may indicate a model type constraint that is not supported by the first device for model training.

In some embodiments, a model type may indicate a development framework of a model, where the development framework of a model can provide tools and libraries required for building, training, and deployment of the model.

In some embodiments, a development framework of a model may include one or more of the following: TensorFlow, PyTorch, open neural network xxchange (ONNX), Keras, Caffe2, MXNet, ML.NET, Scikit-learn, Tensor, Theano, and computational network toolkit (CNTK).

For example, the first condition indicates that a development framework that is supported by the first device for model training is TensorFlow. That is, the first device can perform model training for models developed using TensorFlow, but cannot perform model training for models developed using other development frameworks.

In other embodiments, a model type may indicate a model structure of a model, where the model structure indicates the overall architecture and components of the model.

In some embodiments, a model structure may include one or more of the following: a fully connected network, a CNN, a RNN, a long short-term memory (LSTM) structure, a transformer structure, and a mixer structure.

For example, the first condition may indicate that a model structure that is supported by the first device for model training is an LSTM structure. That is, the first device can perform model training for models with an LSTM structure, but cannot perform model training for models with other model structures.

Taking that the first condition is associated with a model size as an example, in some embodiments, the first condition may indicate a model size constraint that is supported by the first device for model training. For example, the first condition may indicate an upper limit of a model size that is supported by the first device for model training. Of course, in the embodiments of the present disclosure, the first condition may indicate a model size constraint that is not supported by the first device for model training. For example, the first condition may indicate a lower limit of a model size that is not supported by the first device for model training.

In some embodiments, a model size may be indicated by a storage space occupied by a model. For example, a model size may be measured in bytes. Typically, a larger model size indicates that a model requires more storage space to be stored and operated.

In the embodiments of the present disclosure, no specific constraint is placed on the first condition. In some embodiments, if the first condition indicates the model size constraint that is supported by the first device for model training, the first condition may indicate one of the following: the model size that is supported by the first device for model training is 10 bytes; the model size that is supported by the first device for model training is 100 bytes; the model size that is supported by the first device for model training is 1 kB; the model size that is supported by the first device for model training is 1 MB; the model size that is supported by the first device for model training is 10 MB; the model size that is supported by the first device for model training is 100 MB; the model size that is supported by the first device for model training is 200 MB; the model size that is supported by the first device for model training is 500 MB; and the model size that is supported by the first device for model training is 1 GB.

For example, the first condition may indicate that the model size that is supported by the first device for model training is 10 MB. In this case, the upper limit of the model size that is supported by the first device for model training is 10 MB, that is, the first device supports model training for a model of a size equal to or less than 10 MB. For another example, the first condition may indicate that the model size that is not supported by the first device for model training is 10 MB. In this case, the lower limit of the model size that is not supported by the first device for model training is 10 MB, that is, the first device does not support model training for a model larger than 10 MB in size.

In other embodiments, a model size may also be indicated by a model parameter size of a model to be trained. For example, the model parameter size may be measured in bytes.

In the embodiments of the present disclosure, no specific constraint is placed on the first condition. In some embodiments, if the first condition indicates a model parameter size constraint of a model that is supported by the first device for model training, the first condition may indicate one of the following: the model parameter size of a model that is supported by the first device for model training is 5; the model parameter size of a model that is supported by the first device for model training is 10; the model parameter size of a model that is supported by the first device for model training is 20; the model parameter size of a model that is supported by the first device for model training is 50; the model parameter size of a model that is supported by the first device for model training is 100; the model parameter size of a model that is supported by the first device for model training is 200; the model parameter size of a model that is supported by the first device for model training is 500; the model parameter size of a model that is supported by the first device for model training is 1k; the model parameter size of a model that is supported by the first device for model training is 2k; the model parameter size of a model that is supported by the first device for model training is 5k; the model parameter size of a model that is supported by the first device for model training is 10k; the model parameter size of a model that is supported by the first device for model training is 100k; the model parameter size of a model that is supported by the first device for model training is 1M; the model parameter size of a model that is supported by the first device for model training is 10M; the model parameter size of a model that is supported by the first device for model training is 100M; the model parameter size of a model that is supported by the first device for model training is 1G; the model parameter size of a model that is supported by the first device for model training is 10G; the model parameter size of a model that is supported by the first device for model training is 100G; the model parameter size of a model that is supported by the first device for model training is 1T; the model parameter size of a model that is supported by the first device for model training is 10T; and the model parameter size of a model that is supported by the first device for model training is 100T.

For example, the first condition may indicate that the model parameter size of a model that is supported by the first device for model training is 10G. In this case, the upper limit of the model parameter size that is supported by the first device for model training is 10G, that is, the first device supports model training for a model with a model parameter size equal to or less than 10G. For another example, the first condition may indicate that a model parameter size of a model that is not supported by the first device for model training is 10G. In this case, the lower limit of the model parameter size that is not supported by the first device for model training is 10G, that is, the first device does not support model training for a model with a model parameter size larger than 10G.

In other embodiments, a model size may be indicated via a model size level, where different model size levels correspond to different model sizes. In some embodiments, the model size level may include one or more of the following: extra-small model level; small model level; medium model level; large model level; and extra-large model level.

It may be noted that, the model size levels may be classified based on model parameter sizes, or the model size levels may be classified based on storage spaces required to be occupied by models.

In addition, in the embodiments of the present disclosure, the model size level may be determined by one or more of the following: predefined; preconfigured; configured by the second device; and configured by the first device.

For example, the first condition may indicate that a model size level that is supported by the first device for model training is the large model level. In this case, the upper limit of the model size level that is supported by the first device for model training is the large model level, that is, the first device supports model training for a model at a mode size level lower than the large model level. For another example, the first condition may indicate that a model size level that is not supported by the first device for model training is the large model level. In this case, the lower limit of the model size level that is not supported by the first device for model training is the large model level, that is, the first device does not support model training for a model at a model size level higher than the large model level.

Taking that the first condition is associated with a data volume as an example, in some embodiments, the first condition may indicate a data volume constraint of data that is supported by the first device for model training. For example, the first condition may indicate the upper limit of the data volume of data that is supported by the first device for model training. Of course, in the embodiments of the present disclosure, the first condition may indicate a data volume constraint of data that is not supported by the first device for model training. For example, the first condition indicates the lower limit of the data volume of data that is not supported by the first device for model training.

In some embodiments, data available for model training may include one or more of the following: data in a training set, data in a validation set, and data in a test set. Of course, in the embodiments of the present disclosure, no specific constraint is placed on data available for model training. For example, data available for model training may include feature data, where feature data is derived from input data through feature extraction to represent key features of the input data.

In the embodiments of the present disclosure, no specific constraint is placed on the first condition. In some embodiments, if the first condition indicates the data volume constraint of data that is supported by the first device for model training, the first condition may indicate one of the following: data volume of data that is supported by the first device for model training is

For example, the first condition may indicate that the data volume of data that is supported by the first device for model training is 10MB. In this case, the upper limit of the data volume of data that is supported by the first device for model training is 10MB, that is, the first device supports model training for a model based on data with a data volume equal to or less than 10MB. For another example, the first condition may indicate that the data volume of data that is not supported by the first device for model training. In this case, the lower limit of the data volume of data that is not supported by the first device for model training is 10MB, that is, the first device does not support model training for a model based on data with a data volume larger than 10MB.

In other embodiments, a data volume of data for model training may be determined based on a sample size of training data. For example, the sample size may be measured in bytes.

In the embodiments of the present disclosure, no specific constraint is placed on the first condition. In some embodiments, if the first condition indicates a sample size constraint of training data that is supported by the first device for model training, the first condition may indicate one of the following: a sample size of training data that is supported by the first device for model training is 5; the sample size of training data that is supported by the first device for model training is 10; the sample size of training data that is supported by the first device for model training is 20; the sample size of training data that is supported by the first device for model training is 50; the sample size of training data that is supported by the first device for model training is 100; the sample size of training data that is supported by the first device for model training is 200; the sample size of training data that is supported by the first device for model training is 500; the sample size of training data that is supported by the first device for model training is 1k; the sample size of training data that is supported by the first device for model training is 2k; the sample size of training data that is supported by the first device for model training is 5k; the sample size of training data that is supported by the first device for model training is 10k; the sample size of training data that is supported by the first device for model training is 100k; the sample size of training data that is supported by the first device for model training is 1M; the sample size of training data that is supported by the first device for model training is 10M; the sample size of training data that is supported by the first device for model training is 100M; the sample size of training data that is supported by the first device for model training is 1G; the sample size of training data that is supported by the first device for model training is 10G; the sample size of training data that is supported by the first device for model training is 100G; the sample size of training data that is supported by the first device for model training is 1T; the sample size of training data that is supported by the first device for model training is 10T; and the sample size of training data that is supported by the first device for model training is 100T.

For example, the first condition may indicate that the sample size of training data that is supported by the first device for model training is 10G. In this case, the upper limit of the sample size of training data that is supported by the first device for model training is 10G, that is, the first device supports model training for a model corresponding to a sample size less than or equal to 10G. In another example, the first condition may indicate that a sample size of training data that is not supported by the first device for model training is 10G. In this case, the lower limit of the sample size of training data that is not supported by the first device for model training is 10G, that is, the first device does not support model training for a model corresponding to a sample size greater than 10G.

In other embodiments, a data volume may be indicated via a data volume level, where different data volume levels correspond to different data volume. In some embodiments, the data volume level may include one or more of the following: extra-small data volume level; small data volume level; medium data volume level; large data volume level; and ultra-large data volume level.

It may be noted that, the data volume levels may be classified based on sample sizes, or the data volume levels may be classified based on data volume for model training.

Additionally, in the embodiments of the present disclosure, the data volume level may be determined in one or more of the following manners: predefined; pre-configured; configured by the second device; and configured by the first device.

For example, the first condition may indicate that a data volume level of data that is supported by the first device for model training is the large data volume level. In this case, the upper limit of the data volume level that is supported by the first device for model training is the large data volume level, that is, the first device supports model training for a model corresponding to a data volume level lower than the large data volume level. For another example, the first condition may indicate that the data volume level of data that is not supported by the first device for model training is the large data volume level. In this case, the lower limit of the data volume level of data that is not supported by the first device for model training is the large data volume level, that is, the first device does not support model training for a model corresponding to a data volume at a data volume level higher than the large data volume level.

Taking that the first condition is associated with computing capability for model training as an example, in some embodiments, the first condition may indicate a computing capability constraint that is supported by the first device for model training. For example, the first condition may indicate the upper limit of computing capability that is supported by the first device for model training. Of course, in the embodiments of the present disclosure, the first condition may indicate a computing capability constraint that is not supported by the first device for model training. For example, the first condition may indicate the lower limit of computing capability that is not supported by the first device for model training.

In some embodiments, computing capability for model training may indicate computational resources and capabilities required to perform complex computational tasks. For example, the computing capability for model training may include one or more of the following: central processing unit (CPU) computing capability, graphics processing unit (GPU) computing capability, tensor processing unit (TPU) computing capability, network bandwidth, and storage capacity.

In some embodiments, the unit of measurement for computing capability for model training may be floating point operations per second (FLOPS). Of course, in the embodiments of the present disclosure, the unit of measurement for computing capability for model training may be tera operations per second (TOPS), representing 1 trillion operations per second.

In the embodiments of the present disclosure, no specific constraint is placed on the first condition. In some embodiments, if the first condition indicates computing capability constraint that is supported by the first device for model training, the first condition may indicate one of the following: a computing capability that is supported by the first device for model training is 1K FLOPS; the computing capability that is supported by the first device for model training is 1M FLOPS; the computing capability that is supported by the first device for model training is 10M FLOPS; the computing capability that is supported by the first device for model training is 100M FLOPS; the computing capability that is supported by the first device for model training is 1G FLOPS; the computing capability that is supported by the first device for model training is 10G FLOPS; the computing capability that is supported by the first device for model training is 100G FLOPS; the computing capability that is supported by the first device for model training is 1T FLOPS; the computing capability that is supported by the first device for model training is 10T FLOPS.

In other embodiments, if the first condition indicates the computing capability constraint that is supported by the first device for model training, the first condition may indicate one of the following: the computing capability that is supported by the first device for model training is 1TOPS; the computing capability that is supported by the first device for model training is 2TOPS; the computing capability that is supported by the first device for model training is STOPS; the computing capability that is supported by the first device for model training is 10TOPS; the computing capability that is supported by the first device for model training is 20TOPS; the computing capability that is supported by the first device for model training is 50TOPS; the computing capability that is supported by the first device for model training is 100TOPS; the computing capability that is supported by the first device for model training is 200TOPS; the computing capability that is supported by the first device for model training is 500TOPS; the computing capability that is supported by the first device for model training is 1000TOPS.

For example, the first condition may indicate that the computing capability that is supported by the first device for model training is one billion FLOPS. In this case, the upper limit of the computing capability that is supported by the first device for model training is one billion FLOPS, that is, the first device supports model training requiring computing capability less than one billion FLOPS. For another example, the first condition may indicate that computing capability that is not supported by the first device for model training is one billion FLOPS. In this case, the lower limit of the computing capability that is not supported by the first device for model training is one billion FLOPS, that is, the first device does not support model training requiring computing capability greater than one billion FLOPS.

In other embodiments, the computing capability may be indicated via a computing capability level, where different computing capability levels correspond to different computing capability. In some embodiments, the computing capability level may include one or more of the following: an extra-small computing capability level; a small computing capability level; a medium computing capability level; a large computing capability level; and an ultra-large computing capability level.

It may be noted that, the computing capability levels mentioned above may be classified based on computing capability. In addition, in the embodiments of the present disclosure, the computing capability level may be determined in one or more of the following manners: predefined; pre-configured; configured by the second device; and configured by the first device.

For example, the first condition may indicate that a computing capability level supported by the first device is the large computing capability level. In this case, the upper limit of the computing capability level that is supported by the first device for model training is the large computing capability level, that is, the first device supports model training for a model corresponding to a computing capability level lower than the large computing capability level. For another example, the first condition may indicate that a computing capability level unsupported by the first device is the large computing capability level. In this case, the lower limit of the computing capability level unsupported by the first device is the large computing capability level, that is, the first device does not support model training for a model corresponding to computing capability at a computing capability level higher than the large computing capability level.

In other embodiments, computing capability may be indicated via model computational complexity. A unit of measurement for model computational complexity may be FLOPS. Of course, in the embodiments of the present disclosure, the unit of measurement for model computational complexity may be TOPS.

In the embodiments of the present disclosure, no specific constraint is placed on the first condition. In some embodiments, if the first condition indicates the computing capability constraint that is supported by the first device for model training, the first condition may indicate one of the following: model computational complexity supported by the first device is 1K FLOPS; the model computational complexity supported by the first device is 10M FLOPS; the model computational complexity supported by the first device is 100M FLOPS; the model computational complexity supported by the first device is 1G FLOPS; the model computational complexity supported by the first device is 10G FLOPS; the model computational complexity supported by the first device is 100G FLOPS; the model computational complexity supported by the first device is 1T FLOPS; the model computational complexity supported by the first device is 10T FLOPS.

For example, the first condition may indicate that the model computational complexity supported by the first device is one billion FLOPS. In this case, the upper limit of the model computational complexity supported by the first device is one billion FLOPS, that is, the first device supports model training that requires model computational complexity less than one billion FLOPS. For another example, the first condition may indicate that model computational complexity unsupported by the first device is one billion FLOPS. In this case, the lower limit of the model computational complexity unsupported by the first device is one billion FLOPS, that is, the first device does not support model training that requires model computational complexity greater than one billion FLOPS.

In other embodiments, computing capability may be indicated via a model computational complexity level, where different model computational complexity levels correspond to different computing capability.

In some embodiments, the model computational complexity level may include one or more of the following: an extra-small model computational complexity level; a small model computational complexity level; a medium model computational complexity level; a large model computational complexity level; and an ultra-large model computational complexity level.

It may be noted that, the model computational complexity levels mentioned above may be classified based on model computational complexity. In addition, in the embodiments of the present disclosure, the model computational complexity level may be determined in one or more of the following manners: predefined; pre-configured; configured by the second device; and configured by the first device.

For example, the first condition may indicate that a model computational complexity level supported by the first device is the large model computational complexity level. In this case, the upper limit of the model computational complexity level that is supported by the first device for model training is the large model computational complexity level, that is, the first device supports model training for a model corresponding to a model computational complexity level lower than the large model computational complexity level. For another example, the first condition may indicate that a model computational complexity level unsupported by the first device is the large model computational complexity level. In this case, the lower limit of the model computational complexity level unsupported by the first device is the large model computational complexity level, that is, the first device does not support model training for a model corresponding to model computational complexity at a model computational complexity level higher than the large model computational complexity level.

Taking that the first condition is associated with time for model training as an example, in some embodiments, the first condition may indicate a time constraint that is supported by the first device for model training. For example, the first condition may indicate the upper limit of time that is supported by the first device for model training. Of course, in the embodiments of the present disclosure, the first condition may indicate a time constraint that is not supported by the first device for model training. For example, the first condition may indicate the lower limit of time that is not supported by the first device for model training.

In some embodiments, if the first condition indicates the time constraint that is supported by the first device for model training, the time constraint may indicate one or more of the following: a duration that is supported by the first device for model training; a period of time that is supported by the first device for model training; and a cycle that is supported by the first device for model training.

In some embodiments, the case that the time constraint indicates the duration that is supported by the first device for model training may be understood as that the time constraint indicates a duration during which the first device can participate in model training.

For example, the first condition may indicate that the duration that is supported by the first device for model training is 30 seconds. In this case, the upper limit of the duration that is supported by the first device for model training is 30 seconds, that is, the first device supports model training with a duration less than 30 seconds. For another example, the first condition may indicate that a duration that is not supported by the first device for model training is 30 seconds. In this case, the lower limit of the duration that is not supported by the first device for model training is 30 seconds, that is, the first device does not support model training with a duration greater than 30 seconds.

In some embodiments, the case that the time constraint indicates the period of time that is supported by the first device for model training may be understood as that the time constraint indicates a period of time during which the first device can participate in model training.

For example, if the first device is used less frequently between 2:00 and 3:00, the first condition may indicate that the period of time that is supported by the first device for model training is from 2:00 to 3:00. In this case, the first device can participate in model training performed between 2:00 and 3:00. For another example, if the first device is frequently used between 8:00 and 20:00, the first condition may indicate that the period of time that is not supported by the first device for model training is from 8:00 to 20:00. In this case, the first device cannot participate in model training performed between 8:00 and 20:00.

In some embodiments, the case that the time constraint indicates the cycle that is supported by the first device for model training may include that the time constraint includes a parameter(s) for determining the cycle. For example, the time constraint may include one or more of the following parameters: a start time of the cycle, a number of repetitions of the cycle, a length of the cycle, or period(s) of time available for model training within the cycle.

In some embodiments, a period of time available for model training within the cycle may be determined based on a time offset, where the time offset is between a reference time and a start time of the period of time available for model training. In the embodiments of the present disclosure, no specific constraint is placed on the reference time. For example, the reference time may be the start time of the cycle. For another example, the reference time may be an end time of the cycle. For yet another example, the reference time may be a certain time within the cycle.

Taking that the first condition is associated with software that is supported by the first device for model training as an example, in some embodiments, the first condition may indicate a software constraint that is supported by the first device for model training. For example, the first condition may indicate software information that is supported by the first device for model training. Of course, in the embodiments of the present disclosure, the first condition may indicate a software constraint that is not supported by the first device for model training. For example, the first condition may indicate software information that is not supported by the first device for model training.

In some embodiments, the above software information may include one or more of the following: a model software version; a model development environment; a model runtime environment; a model deployment tool; and the like. The model development environment may include software development environment for model development, such as programming languages, programming frameworks, and the like. The model deployment tool may include model compilation tools, model compilation format conversion tools, model optimization tools, and the like.

For example, the first condition may indicate that the software constraint that is supported by the first device for model training is a model developed based on model development environment 1. In this case, a model for which the first device supports model training is a model developed based on model development environment 1, that is, the first device can perform model training on a model developed based on model development environment 1. For another example, the first condition may indicate that a software constraint that is not supported by the first device for model training is a model developed based on model development environment 1. In this case, a model for which the first device does not support model training is a model developed based on model development environment 1, that is, the first device cannot perform model training on a model developed based on model development environment 1.

In the embodiments of the present disclosure, no specific constraint is placed on the manner in which the capability information in Examples 1-1 to 1-3 is carried. In some embodiments, the capability information in Examples 1-1 to 1-3 may be indicated via a bitmap. For example, different bits in a bitmap having a length of W2 bits may represent different capability information. For example, the first *m1* bits of the W2-bit bitmap may represent the capability information in Example 1-1, the last *m2* bits of the W2-bit bitmap may represent the capability information in Example 1-2, and the remaining bits of the W2-bit bitmap may represent the capability information in Example 1-3. Of course, in the embodiments of the present disclosure, different indication information may respectively indicate the capability information in Examples 1-1 to 1-3.

### Example 2: The capability information is associated with model compilation

Typically, before a model is deployed to hardware, the model needs to be compiled into an instruction set suitable for a specific hardware platform. This typically involves converting model representation in a high-level language into a low-level instruction set supported by underlying hardware. Currently, not all devices support such compilation, or some devices support only conversion of some hardware instruction sets. Therefore, in the embodiments of the present disclosure, the first device may interact with the second device through the above-mentioned capability information to indicate the capability of the first device associated with model compilation, which can help improve the likelihood that the first device can deploy a model.

In some embodiments, the capability information indicates whether the first device supports compiling a model(s) into a hardware instruction set(s).

In some embodiments, the capability information may occupy a single bit to help reduce the overhead for transmitting the capability information. In this case, if a value of the bit is a first value, the bit may indicate that the first device supports compiling a model into a hardware instruction set. If the value of the bit is a second value, the bit may indicate that the first device does not support compiling a model into a hardware instruction set. The first value may be different from the second value. For example, the first value may be 1 and the second value may be 0. For another example, the first value may be 0 and the second value may be 1. Of course, in the embodiments of the present disclosure, multiple bits may be used to carry the capability information.

In other embodiments, the capability information indicates a hardware instruction set(s) that is supported by the first device for model compilation. For example, the capability information may include an identifier(s) of a hardware instruction set(s) supported by the first device.

In the embodiments of the present disclosure, no specific constraint is placed on the hardware instruction set. For example, the hardware instruction set may include compute unified device architecture (CUDA). As another example, the hardware instruction set may include open computing language (OpenCL). As another example, the hardware instruction set may include Vulkan.

For example, the hardware instruction set may include CUDA, OpenCL, and Vulkan, and the first device supports only model compilation based on CUDA. In this case, the above-mentioned capability information may carry an identifier of CUDA to indicate that the hardware instruction set that is supported by the first device for model compilation is CUDA.

In other embodiments, the capability information indicates a hardware instruction set(s) that is not supported by the first device for model compilation. For example, the capability information may include an identifier(s) of a hardware instruction set(s) unsupported by the first device.

For example, the hardware instruction set may include CUDA, OpenCL, and Vulkan, and the first device does not support model compilation based on OpenCL. In this case, the above-mentioned capability information may carry an identifier of OpenCL to indicate that the hardware instruction set that is not supported by the first device for model compilation is CUDA.

It may be noted that, the above three types of information the information indicating whether the first device supports compiling a model into a hardware instruction set, the information indicating the hardware instruction set that is supported by the first device for model compilation, and the information indicating the hardware instruction set that is not supported by the first device for model compilation-may be independent of each other. Of course, in the embodiments of the present disclosure, the three types of information may be used in combination.

For example, if the capability information indicates the hardware instruction set that is supported by the first device for model compilation, then the information indicating the hardware instruction set that is supported by the first device for model compilation may implicitly indicate that the first device supports compiling a model into a hardware instruction set. To reduce the overhead of transmitting the capability information, the capability information may not need to include an additional bit(s) to indicate that the first device supports compiling a model into a hardware instruction set.

For another example, if the capability information indicates the hardware instruction set(s) that is not supported by the first device for model compilation, and the hardware instruction set(s) unsupported by the first device does not include all predefined hardware instruction sets, then the information indicating the hardware instruction set(s) that is not supported by the first device for model compilation may implicitly indicate that the first device supports compiling a model into a hardware instruction set. To reduce the overhead of transmitting the capability information, the capability information may not need to include an additional bit(s) to indicate that the first device supports compiling a model into a hardware instruction set.

### Example 3: The capability information is associated with model deployment

Typically, a model needs to be deployed onto hardware for inference or training, and this process may be implemented by loading a model onto a hardware device based on software libraries or software frameworks. After a model is deployed onto hardware, the computing capability of the hardware can be utilized to perform real-time inference or training. However, not all devices support the above-described model deployment process. If no distinction is made, a model may be transmitted to a device that does not support model deployment, in which case model transmission becomes meaningless and occupies a large amount of transmission resources. Therefore, in the embodiments of the present disclosure, the first device may interact with the second device through the above-mentioned capability information to indicate the capability of the first device associated with model deployment, thereby helping improve the rationality of model transmission.

In some embodiments, the capability information indicates whether the first device supports deploying a model(s) onto hardware of the first device.

In some embodiments, the capability information may occupy one bit, which helps reduce overhead required for transmitting the capability information. In this case, if a value of the bit is a first value, the bit may indicate that the first device supports deploying a model onto the hardware of the first device. If the value of the bit is a second value, the bit may indicate that the first device does not support deploying a model onto the hardware of the first device. The first value may be different from the second value. For example, the first value may be 1 and the second value may be 0. As another example, the first value may be 0 and the second value may be 1. Of course, in the embodiments of the present disclosure, multiple bits may be used to carry the capability information.

In the embodiments of the present disclosure, no specific constraint is placed on a manner in which the capability information described in Examples 1 to 3 above is carried. In some embodiments, the capability information described in Examples 1 to 3 may be indicated via a bitmap. For example, different bits in a bitmap having a length of *W1* bits may represent different capability information. For example, the first *n1* bits of the *W1*-bit bitmap represents the capability information in Example 1, the last *n2* bits of the *W1*-bit bitmap represents the capability information in Example 2, and the remaining bits of the *W1*-bit bitmap represents the capability information in Example 3. Of course, in the embodiments of the present disclosure, different indication information may respectively indicate the capability information described in Examples 1 to 3.

The capability information in the embodiments of the present disclosure has been described above. Transmission manners for the capability information in the embodiments of the present disclosure are described below with reference to transmission manners 1 to 3.

**Transmission Manner 1:** reporting of the above-mentioned capability information is autonomously triggered by the first device.

That is, the first device autonomously triggers transmission of the capability information of the first device to the second device. In the embodiments of the present disclosure, autonomously triggering transmission of the capability information by the first device helps reduce signaling overhead between the first device and the second device and simplifies a process of reporting the capability information.

**Transmission Manner 2:** reporting of the above-mentioned capability information is triggered by the second device.

As illustrated in FIG. 9, before step S810, the above method further includes: S910, where the second device sends fourth information to the first device to trigger reporting of the capability information. Correspondingly, step S810 includes: in response to receiving the fourth information, the first device sends the capability information to the second device.

In some embodiments, the fourth information indicates that the first device sends the capability information. In other embodiments, the fourth information is used to request the first device to send the capability information.

In the embodiments of the present disclosure, triggering reporting of the capability information by the second device helps avoid unnecessary transmission of the capability information, thereby reduce transmission overhead for the capability information.

**Transmission Manner 3:** information content carried in the capability information is indicated by the second device.

In some scenarios, the second device may need only part of the capability information. In this case, if all the capability information of the first device is transmitted, transmission overhead for the capability information may be excessively large. For example, the second device itself can complete model training and does not require the first device to have the capability of model training. In this case, reporting capability information associated with model training is unnecessary.

Therefore, to address the above issue, in the embodiments of the present disclosure, the second device may indicate information content required to be carried in the capability information by sending the fourth information to the first device, which helps reduce transmission overhead for the capability information.

As illustrated in FIG. 10, before step S810, the above method further includes: S1010, where the second device sends fourth information to the first device, and the fourth information indicates information content required to be carried in the capability information to be sent by the first device. Correspondingly, step S810 may include sending, by the first device to the second device, the capability information, where content carried in the capability information matches the information content indicated in the fourth information.

In the embodiments of the present disclosure, no specific constraint is placed on a specific manner for indicating the information content required to be carried in the capability information. In some embodiments, the fourth information may carry a target task, where the target task is associated with part or all of the above-mentioned capability information. In this case, the first device may carry, in the capability information, part or all of the information associated with the target task.

For example, if the target task carried in the fourth information is model training, the first device may carry, in the capability information, capability information associated with model training.

As another example, if the target task carried in the fourth information is two-sided model training, the first device may carry, in the capability information, the second information associated with two-sided model training.

In other embodiments, the fourth information may directly carry an index of information content required to be carried in the capability information. For example, if an index of capability information associated with model training is 01, an index of capability information associated with model deployment is 02, and an index of capability information associated with model compilation is 03, then the fourth information may carry 01 to indicate that information content required to be carried in the capability information is the capability information associated with model training.

It may be noted that, in other embodiments, the above-mentioned fourth information may indicate information content that does not need to be carried in the capability information to be sent by the first device, which can also reduce transmission overhead for the capability information to a certain extent.

It may further be noted that, the fourth information in manner 2 and the fourth information in manner 3 may be used separately, or may be used in combination. In this case, if the fourth information indicates information content required to be carried in the capability information, the fourth information may be implicitly used to trigger the first device to report the capability information (that is, the meaning of the fourth information in manner 2). In this case, the fourth information does not need an additional bit(s) to trigger reporting of the capability information, thereby helping reduce transmission overhead for the fourth information. Of course, if this issue is not considered, the fourth information in manner 2 and the fourth information in manner 3 may be indicated by different bits respectively.

In the embodiments of the present disclosure, no constraint is placed on the first device and/or the second device. For example, the first device may be a terminal device and the second device may be a network device. As another example, the first device may be a network device and the second device may be a terminal device. As another example, the first device may be a first terminal device and the second device may be a second terminal device. As another example, the first device may be a first network device and the second device may be a second network device.

The network device may be an access network device, a core network device, an AI/ML model-related information management device, or an operation, administration, and maintenance (OAM) device. Exemplarily, the access network device may be any one of the following: gNB, centralized unit (CU), distributed unit (DU), centralized unit - control plane (CU - CP), or centralized unit - user plane (CU-UP).

Exemplarily, the core network device may be any one of the following: location management function (LMF) network element, network slice selection function (NSSF), authentication server function (AUSF), unified data management (UDM), access and mobility management function (AMF), session management function (SMF), policy control function (PCF), user plane function (UPF), sensing function (SF), or network data analytics function (NWDAF) network element.

In some scenarios, any of the above-mentioned information may include uplink information. For example, when the first device is a terminal device and the second device is a network device, the capability information may be uplink information. As another example, when the second device is a terminal device and the first device is a network device, the fourth information may be uplink information.

In some embodiments, when the above information is uplink information, the information may be carried in one or more of the following: radio resource control (RRC) message, uplink control information (UCI) message, uplink message during random access (RA) (e.g., MsgA and/or Msg3), physical uplink control channel (PUCCH), physical uplink shared channel (PUSCH), uplink channel dedicated to AI/ML, and UE capability.

For example, when the first device is a UE and the second device is a network device, the UE sends UE capability to the network device, where the UE capability carries the above capability information.

As another example, when the first device is a terminal device and the second device is a network device, during RA, the terminal device sends an uplink message (e.g., MsgA and/or Msg3) to the network device, and the uplink message may carry the capability information, which helps quickly transmit the capability information to the network device.

As another example, when the first device is a terminal device and the second device is a network device, the terminal device sends UCI to the network device, where the UCI may carry the capability information, which helps quickly transmit the capability information to the network device.

As another example, when the first device is a terminal device and the second device is a network device, the terminal device sends an RRC message to the network device, where the RRC message may carry the capability information, which helps avoid occupying excessive resources for capability reporting and other control resources such as UCI.

In other scenarios, any of the above information may include downlink information. For example, when the first device is a network device and the second device is a terminal device, the capability information may be downlink information. As another example, when the second device is a network device and the first device is a terminal device, the fourth information may be downlink information.

In some embodiments, when the above information is downlink information, the information may be carried in one or more of the following: broadcast message (e.g., MIB, SIB1, SIBx), RRC message, media access control control element (MAC CE), downlink control information (DCI), downlink message during RA (e.g., one or more of MsgB, Msg2, Msg4), physical downlink control channel (PDCCH), physical downlink shared channel (PDSCH), downlink channel dedicated to AI/ML, and network device capability.

For example, when the first device is a network device and the second device is a terminal device, the network device sends network device capability to the terminal device, where the network device capability carries the above capability information.

As another example, when the first device is a network device and the second device is a terminal device, during RA, the network device sends a downlink message to the terminal device, where the downlink message may carry the capability information, which helps quickly transmit the capability information to the terminal device.

As another example, when the first device is a network device and the second device is a terminal device, the network device sends DCI to the terminal device, where the DCI may carry the capability information, which helps quickly transmit the capability information to the terminal device.

As another example, when the first device is a network device and the second device is a terminal device, the network device sends an RRC message to the terminal device, where the RRC message may carry the capability information, which helps avoid occupying excessive resources for capability reporting and other control resources such as DCI.

In some scenarios, any of the above information may include sidelink information. For example, when both the first device and the second device are terminal devices, the capability information and the fourth information may both be sidelink information.

In some embodiments, when the above information is sidelink information, the information may be carried in one or more of the following: sidelink control information (SCI), physical sidelink control channel (PSCCH), physical sidelink shared channel (PSSCH), and UE capability.

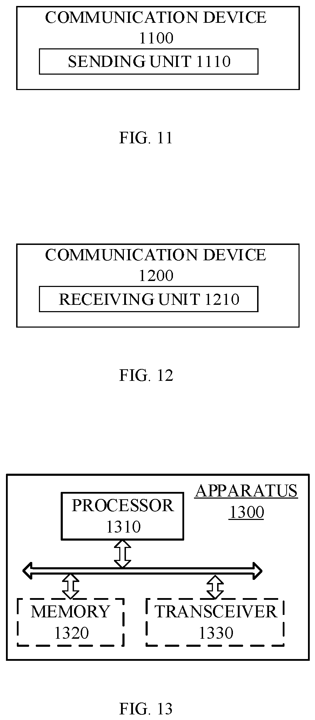

With reference to FIG. 1 to FIG. 10, the method embodiments of the present disclosure are described in detail above. With reference to FIG. 11 to FIG. 13, apparatus embodiments of the present disclosure are described in detail below. It may be understood that, the illustration of the method embodiments and the illustrations of the apparatus embodiments correspond to each other. Therefore, for parts that are not described in detail, reference may be made to the foregoing method embodiments.

FIG. 11 is a schematic diagram of a communication device according to embodiments of the present disclosure. A communication device 1100 as illustrated in FIG. 11 is a first device. The communication device 1100 includes a sending unit 1110.

The sending unit 1110 is configured to send capability information of the first device to a second device, where the capability information is associated with one or more of the following: model training; model compilation; and model deployment.

In some embodiments, in a case where the capability information is associated with the model training, the capability information includes one or more of the following: first information indicating whether the first device supports the model training; second information indicating a training type of the model training supported by the first device; and third information indicating a first condition, where the first condition is a constraint condition for the first device to perform the model training.

In some embodiments, the training type of the model training includes online training, and the second information further includes one or more of: information indicating whether the first device supports the online training; information indicating a duration supported by the first device for the online training; information indicating a training complexity of the online training that is supported by the first device; and information indicating a data volume of data supported by the first device for the online training.

In some embodiments, the online training is one of multiple types of online training, and different types of online training among the multiple types of online training are associated with different second information.

In some embodiments, the training type of the model training includes dual-end training, and the second information includes one or more of: information indicating a training device for performing the dual-end training; information indicating whether the first device supports the dual-end training; information indicating a training manner of the dual-end training that is supported by the first device; information indicating whether the first device supports the dual-end training initiated by the first device; information indicating whether the first device supports the dual-end training initiated by the second device; information indicating whether the first device supports data transmission required for performing the dual-end training; information indicating whether the first device supports data generation required for performing the dual-end training; information indicating whether the first device supports data reception required for performing the dual-end training; and information indicating whether the first device supports data processing required for performing the dual-end training.

In some embodiments, in a case where the second information includes the information indicating the training manner of the dual-end training that is supported by the first device, the training manner of the dual-end training includes one or more of: multiple devices respectively completing model training for multiple models; and multiple devices jointly completing model training for multiple models.

In some embodiments, in a case where the second information includes the information indicating the training device for performing the dual-end training, the training device includes the first device or a target device associated with the first device.

In some embodiments, in a case where the second information includes the information indicating whether the first device supports the data transmission required for performing the dual-end training, and the dual-end training is that multiple devices jointly complete model training for multiple models, the data transmission required for the dual-end training includes transmission of one or more of: model parameters required for the dual-end training; model gradient data required for the dual-end training; and quantized model data required for the dual-end training.

In some embodiments, in a case where the dual-end training is that multiple devices respectively complete model training for multiple models, the second information includes one or more of: the information indicating whether the first device supports the data reception required for performing the dual-end training; and the information indicating whether the first device supports the data processing required for performing the dual-end training.

In some embodiments, in a case where the dual-end training is that multiple devices respectively complete model training for multiple models, the second information includes one or more of: the information indicating whether the first device supports the data generation required for performing the dual-end training; and the information indicating whether the first device supports data transmission required for the dual-end training.

In some embodiments, in a case where the dual-end training is that multiple devices respectively complete model training for multiple models, the second information includes one or more of: the information indicating whether the dual-end training initiated by the first device is supported; and the information indicating whether the dual-end training initiated by the second device is supported.

In some embodiments, the dual-end training is one of multiple types of dual-end training, and different types of dual-end training among the multiple types of dual-end training are associated with different second information.

In some embodiments, the capability information includes the third information, and the first condition indicates one or more of: a model-use-case use-case type constraint supported by the first device for the model training; a model type constraint supported by the first device for the model training; a model size constraint supported by the first device for the model training; a data volume constraint of data supported by the first device for the model training; a computing capability constraint supported by the first device for the model training; a time constraint supported by the first device for the model training; and a software constraint supported by the first device for the model training.

In some embodiments, in a case where the capability information is associated with the model compilation, the capability information indicates whether the first device supports compiling a model into a hardware instruction set.

In some embodiments, in a case where the capability information is associated with the model deployment, the capability information indicates whether the first device supports deploying a model onto hardware of the first device.

In some embodiments, the communication device further includes a receiving unit configured to receive fourth information sent by the second device, where the fourth information includes one or more of: information indicating that the first device sends the capability information; and information indicating information content required to be carried in the capability information to be sent by the first device.

FIG. 12 is a schematic diagram of a communication device according to other embodiments of the present disclosure. A communication device 1200 as illustrated in FIG. 12 is a second device. The communication device 1200 includes a receiving unit 1210.

The receiving unit 1210 is configured to receiving capability information of a first device sent by the first device, where the capability information is associated with one or more of the following: model training; model compilation; and model deployment.

In some embodiments, in a case where the capability information is associated with the model training, the capability information includes one or more of the following: first information indicating whether the first device supports the model training; second information indicating a training type of the model training supported by the first device; and third information indicating a first condition, where the first condition is a constraint condition for the first device to perform the model training.

In some embodiments, the training type of the model training includes online training, and the second information further includes one or more of: information indicating whether the first device supports the online training; information indicating a duration supported by the first device for the online training; information indicating a training complexity of the online training that is supported by the first device; and information indicating a data volume of data supported by the first device for the online training.

In some embodiments, the online training is one of multiple types of online training, and different types of online training among the multiple types of online training are associated with different second information.

In some embodiments, the training type of the model training includes dual-end training, and the second information includes one or more of: information indicating a training device for performing the dual-end training; information indicating whether the first device supports the dual-end training; information indicating a training manner of the dual-end training that is supported by the first device; information indicating whether the first device supports the dual-end training initiated by the first device; information indicating whether the first device supports the dual-end training initiated by the second device; information indicating whether the first device supports data transmission required for performing the dual-end training; information indicating whether the first device supports data generation required for performing the dual-end training; information indicating whether the first device supports data reception required for performing the dual-end training; and information indicating whether the first device supports data processing required for performing the dual-end training.

In some embodiments, in a case where the second information includes the information indicating the training manner of the dual-end training that is supported by the first device, the training manner of the dual-end training includes one or more of: multiple devices respectively completing model training for multiple models; and multiple devices jointly completing model training for multiple models.

In some embodiments, in a case where the second information includes the information indicating the training device for performing the dual-end training, the training device includes the first device or a target device associated with the first device.

In some embodiments, in a case where the second information includes the information indicating whether the first device supports the data transmission required for performing the dual-end training, and the dual-end training is that multiple devices jointly complete model training for multiple models, the data transmission required for the dual-end training includes transmission of one or more of: model parameters required for the dual-end training; model gradient data required for the dual-end training; and quantized model data required for the dual-end training.

In some embodiments, in a case where the dual-end training is that multiple devices respectively complete model training for multiple models, the second information includes one or more of: the information indicating whether the first device supports the data reception required for performing the dual-end training; and the information indicating whether the first device supports the data processing required for performing the dual-end training.

In some embodiments, in a case where the dual-end training is that multiple devices respectively complete model training for multiple models, the second information includes one or more of: the information indicating whether the first device supports the data generation required for performing the dual-end training; and the information indicating whether the first device supports data transmission required for the dual-end training.

In some embodiments, in a case where the dual-end training is that multiple devices respectively complete model training for multiple models, the second information includes one or more of: the information indicating whether the dual-end training initiated by the first device is supported; and the information indicating whether the dual-end training initiated by the second device is supported.

In some embodiments, the dual-end training is one of multiple types of dual-end training, and different types of dual-end training among the multiple types of dual-end training are associated with different second information.

In some embodiments, the capability information includes the third information, and the first condition indicates one or more of: a model-use-case use-case type constraint supported by the first device for the model training; a model type constraint supported by the first device for the model training; a model size constraint supported by the first device for the model training; a data volume constraint of data supported by the first device for the model training; a computing capability constraint supported by the first device for the model training; a time constraint supported by the first device for the model training; and a software constraint supported by the first device for the model training.

In some embodiments, in a case where the capability information is associated with the model compilation, the capability information indicates whether the first device supports compiling a model into a hardware instruction set.

In some embodiments, in a case where the capability information is associated with the model deployment, the capability information indicates whether the first device supports deploying a model onto hardware of the first device.

In some embodiments, the communication device further includes a sending unit configured to send fourth information to the first device, where the fourth information includes one or more of: information indicating that the first device sends the capability information; and information indicating information content required to be carried in the capability information to be sent by the first device.

In optional embodiments, the sending unit 1110 may be a transceiver 1330. The communication device 1100 may further include a processor 1310 and a memory 1320, as illustrated in FIG. 13.

In optional embodiments, the receiving unit 1210 may be a transceiver 1330. The communication device 1200 may further include a processor 1330 and a memory 1320, as illustrated in FIG. 13.

FIG. 13 is a schematic structural diagram of a communication apparatus according to embodiments of the present disclosure. Dashed lines in FIG. 13 indicate that the corresponding unit or module is optional. The apparatus 1300 may be configured to implement the methods described in the foregoing method embodiments. The apparatus 1300 may be a chip, a terminal device, or a network device.

The apparatus 1300 may include one or more processors 1310. The processor 1310 may support the apparatus 1300 in implementing the methods described in the foregoing method embodiments. The processor 1310 may be a general-purpose processor or a dedicated processor. For example, the processor may be a central processing unit (CPU). Alternatively, the processor may be another general-purpose processor, a digital signal processor (DSP), an application specific integrated circuit (ASIC), a field programmable gate array (FPGA), another programmable logic device, a discrete gate or transistor logic device, or a discrete hardware component. The general-purpose processor may be a microprocessor, or the processor may be any conventional processor.

The apparatus 1300 may further include one or more memories 1320. A program is stored in the memory 1320, and the program is executable by the processor 1310 to cause the processor 1310 to perform the methods described in the foregoing method embodiments. The memory 1320 may be independent of the processor 1310 or may be integrated into the processor 1310.

The apparatus 1300 may further include a transceiver 1330. The processor 1310 may communicate with another device or chip through the transceiver 1330. For example, the processor 1310 may transmit data to or receive data from another device or chip through the transceiver 1330.

Embodiments of the present disclosure further provide a computer-readable storage medium configured to store a program. The computer-readable storage medium may be applied to a terminal device or a network device provided in embodiments of the present disclosure, and the program causes a computer to perform the methods executed by the terminal device or the network device in embodiments of the present disclosure.

Embodiments of the present disclosure further provide a computer program product. The computer program product includes a program. The computer program product may be applied to a terminal device or a network device provided in embodiments of the present disclosure, and the program causes a computer to perform the methods executed by the terminal device or the network device in embodiments of the present disclosure.

Embodiments of the present disclosure further provide a computer program. The computer program may be applied to a terminal device or a network device provided in embodiments of the present disclosure, and the computer program causes a computer to perform the methods executed by the terminal device or the network device in embodiments of the present disclosure.

It may be understood that, in the present disclosure, the terms "system" and "network" may be used interchangeably. In addition, the terminology used in the present disclosure is for the purpose of describing specific embodiments of the present disclosure only and is not intended to limit the present disclosure. The terms "first," "second," "third," and "fourth" used in the specification, the claims, and the accompanying drawings of the present disclosure are used to distinguish different objects rather than to describe a particular order. Furthermore, the terms "include" and "have," and any variations thereof, are intended to cover non-exclusive inclusion.

In embodiments of the present disclosure, the term "indicate", "indication", and "indicating" may refer to a direct indication, an indirect indication, or an indication of an association relationship. For example, *A* indicating *B* may indicate that A directly indicates B, for example, *B* may be obtained through *A;* or may indicate that *A* indirectly indicates *B,* for example, *A* indicates C, and *B* may be obtained through C; or may indicate that an association relationship exists between *A and B.*

In embodiments of the present disclosure, *"B* corresponding to *A"* means that *B* is associated with *A* and *B* can be determined based on *A.* It may also be understood that, determining *B* based on *A* does not mean that *B* is determined solely based on *A,* and *B* may also be determined based on A and/or other information.

In embodiments of the present disclosure, the term "corresponding" and "correspondence" may indicate a direct correspondence or an indirect correspondence between two entities, may indicate an association relationship between the two entities, or may indicate relationships such as indication and indicated, configuration and configured, and the like.

In embodiments of the present disclosure, the terms "predefined" or "preconfigured" may be implemented by pre-storing corresponding code, tables, or other means usable for indicating related information in a device (for example, including a terminal device and a network device). Specific implementation manners thereof are not limited in the present disclosure. For example, "predefined" may refer to being defined in a protocol.

In embodiments of the present disclosure, the term "protocol" may refer to a standard protocol in the communication field, for example, may include an LTE protocol, an NR protocol, and related protocols applicable to future communication systems, which is not limited in the present disclosure.

The term "and/or" in embodiments of the present disclosure describes an association relationship between associated objects, and indicates that there may be three relationships, for example, *A* and/or *B* may mean *A* alone, both *A* and *B* exist, and *B* alone. The character "/" herein can indicate that associated objects are in an "or" relationship.

In various embodiments of the present disclosure, the magnitude of sequence numbers of the foregoing processes does not indicate an execution order. The execution order of the processes may be determined based on their functions and internal logic, and may not constitute any limitation on the implementation process of embodiments of the present disclosure.

In several embodiments provided in the present disclosure, it may be understood that, the disclosed systems, apparatuses, and methods may be implemented in other manners. For example, the apparatus embodiments described above are merely illustrative. For example, division of units is only a logical function division, and other division manners may be adopted during actual implementation. For example, multiple units or components may be combined or integrated into another system, or some features may be omitted or not performed. In addition, coupling or direct coupling or communication connection as illustrated or discussed may be an indirect coupling or communication connection through some interfaces, apparatuses or modules, and may be electrical, mechanical, or otherwise.

Units described as separate components may or may not be physically separated, and components illustrated as units may or may not be physical units, that is, may be located in one place or distributed over multiple network units. Some or all of the units may be selected according to actual needs to achieve the objectives of the solutions of the embodiments.

In addition, functional units in various embodiments of the present disclosure may be integrated into one processing unit, may exist as separate physical units, or two or more units may be integrated into one unit.

All or some of the above embodiments can be implemented through software, hardware, firmware, or any other combination thereof. When implemented by software, all or some the above embodiments can be implemented in the form of a computer program product. The computer program product includes one or more computer instructions. When the computer instructions are applied and executed on a computer, all or some of the operations or functions of the embodiments of the present disclosure are performed. The computer can be a general-purpose computer, a special-purpose computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

The foregoing illustations are merely specific embodiments of the present disclosure, but the protection scope of the present disclosure is not limited thereto. Any variation or substitution that can be readily conceived by a person skilled in the art within the technical scope disclosed in the present disclosure shall fall within the protection scope of the present disclosure. Therefore, the protection scope of the present disclosure shall be subject to the protection scope of the claims.

## Claims

1. A method for wireless communication, comprising:
sending, by a first device, capability information of the first device to a second device, wherein the capability information is associated with one or more of the following:
model training;
model compilation; and
model deployment.

2. The method of claim 1, wherein in a case where the capability information is associated with the model training, the capability information comprises one or more of the following:
first information indicating whether the first device supports the model training;
second information indicating a training type of the model training that is supported by the first device; and
third information indicating a first condition, wherein the first condition is a constraint condition for the first device to perform the model training.

3. The method of claim 2, wherein the training type of the model training comprises online training, and the second information further comprises one or more of the following:
information indicating whether the first device supports the online training;
information indicating a training complexity of the online training that is supported by the first device;
information indicating a duration supported by the first device for the online training; and
information indicating a data volume of data supported by the first device for the online training.

4. The method of claim 3, wherein the online training is one of a plurality of types of online training, and different types of online training among the plurality of types of online training are associated with different second information.

5. The method of claim 2, wherein the training type of the model training comprises two-sided training, and the second information comprises one or more of the following:
information indicating a training device for performing the two-sided training;
information indicating whether the first device supports the two-sided training;
information indicating a training manner of the two-sided training that is supported by the first device;
information indicating whether the first device supports the two-sided training initiated by the first device;
information indicating whether the first device supports the two-sided training initiated by the second device;
information indicating whether the first device supports data transmission required for performing the two-sided training;
information indicating whether the first device supports data generation required for performing the two-sided training;
information indicating whether the first device supports data reception required for performing the two-sided training; and
information indicating whether the first device supports data processing required for performing the two-sided training.

6. The method of claim 5, wherein in a case where the second information comprises the information indicating the training manner of the two-sided training that is supported by the first device, the training manner of the two-sided training comprises one or more of the following:
a plurality of devices respectively completing model training for a plurality of models;
and
a plurality of devices jointly completing model training for a plurality of models.

7. The method of claim 5, wherein in a case where the second information comprises the information indicating the training device for performing the two-sided training, the training device comprises the first device or a target device associated with the first device.

8. The method of claim 5, wherein in a case where the second information comprises the information indicating whether the first device supports the data transmission required for performing the two-sided training, and the two-sided training refers to that a plurality of devices jointly complete model training for a plurality of models, the data transmission required for the two-sided training comprises transmission of one or more of the following data:
model parameters required for the two-sided training;
model gradient data required for the two-sided training; and
quantized model data required for the two-sided training.

9. The method of any one of claims 5 to 8, wherein in a case where the two-sided training refers to that a plurality of devices respectively complete model training for a plurality of models, the second information comprises one or more of the following:
the information indicating whether the first device supports the data reception required for performing the two-sided training; and
the information indicating whether the first device supports the data processing required for performing the two-sided training.

10. The method of any one of claims 5 to 8, wherein in a case where the two-sided training refers to that a plurality of devices respectively complete model training for a plurality of models, the second information comprises one or more of the following:
the information indicating whether the first device supports the data generation required for performing the two-sided training; and
the information indicating whether the first device supports the data transmission required for performing the two-sided training.

11. The method of any one of claims 5 to 8, wherein in a case where the two-sided training refers to that a plurality of devices respectively complete model training for a plurality of models, the second information comprises one or more of the following:
the information indicating whether the first device supports the two-sided training initiated by the first device; and
the information indicating whether the first device supports the two-sided training initiated by the second device.

12. The method of any one of claims 5 to 11, wherein the two-sided training is one of a plurality of types of two-sided training, and different types of two-sided training among the plurality of types of two-sided training are associated with different second information.

13. The method of any one of claims 2 to 12, wherein the capability information comprises the third information, and the first condition indicates one or more of the following:
a model-use-case use-case type constraint supported by the first device for the model training;
a model type constraint supported by the first device for the model training;
a model size constraint supported by the first device for the model training;
a data volume constraint for data supported by the first device for the model training;
a computing capability constraint supported by the first device for the model training;
a time constraint supported by the first device for the model training; and
a software constraint supported by the first device for the model training.

14. The method of any one of claims 1 to 13, wherein in a case where the capability information is associated with the model compilation, the capability information indicates whether the first device supports compiling a model into a hardware instruction set.

15. The method of any one of claims 1 to 14, wherein in a case where the capability information is associated with the model deployment, the capability information indicates whether the first device supports deploying a model onto hardware of the first device.

16. The method of any one of claims 1 to 15, further comprising:
receiving, by the first device, fourth information sent by the second device, wherein the fourth information comprises one or more of the following:
information indicating that the first device sends the capability information; and
information indicating information content required to be carried in the capability information to be sent by the first device.

17. A method for wireless communication, comprising:
receiving, by a second device, capability information of a first device sent by the first device, wherein the capability information is associated with one or more of the following:
model training;
model compilation; and
model deployment.

18. The method of claim 17, wherein in a case where the capability information is associated with the model training, the capability information comprises one or more of the following:
first information indicating whether the first device supports the model training;
second information indicating a training type of the model training that is supported by the first device; and
third information indicating a first condition, wherein the first condition is a constraint condition for the first device to perform the model training.

19. The method of claim 18, wherein the training type of the model training comprises online training, and the second information further comprises one or more of the following:
information indicating whether the first device supports the online training;
information indicating a duration supported by the first device for the online training;
information indicating a training complexity of the online training that is supported by the first device; and
information indicating a data volume of data supported by the first device for the online training.

20. The method of claim 19, wherein the online training is one of a plurality of types of online training, and different types of online training among the plurality of types of online training are associated with different second information.

21. The method of claim 18, wherein the training type of the model training comprises two-sided training, and the second information comprises one or more of the following:
information indicating a training device for performing the two-sided training;
information indicating whether the first device supports the two-sided training;
information indicating a training manner of the two-sided training that is supported by the first device;
information indicating whether the first device supports the two-sided training initiated by the first device;
information indicating whether the first device supports the two-sided training initiated by the second device;
information indicating whether the first device supports data transmission required for performing the two-sided training;
information indicating whether the first device supports data generation required for performing the two-sided training;
information indicating whether the first device supports data reception required for performing the two-sided training; and
information indicating whether the first device supports data processing required for performing the two-sided training.

22. The method of claim 21, wherein in a case where the second information comprises the information indicating the training manner of the two-sided training that is supported by the first device, the training manner of the two-sided training comprises one or more of the following:
a plurality of devices respectively completing model training for a plurality of models;
and
a plurality of devices jointly completing model training for a plurality of models.

23. The method of claim 21, wherein in a case where the second information comprises the information indicating the training device for performing the two-sided training, the training device comprises the first device or a target device associated with the first device.

24. The method of claim 21, wherein in a case where the second information comprises the information indicating whether the first device supports the data transmission required for performing the two-sided training, and the two-sided training refers to that a plurality of devices jointly complete model training for a plurality of models, the data transmission required for the two-sided training comprises transmission of one or more of the following data:
model parameters required for the two-sided training;
model gradient data required for the two-sided training; and
quantized model data required for the two-sided training.

25. The method of any one of claims 21 to 24, wherein in a case where the two-sided training refers to that a plurality of devices respectively complete model training for a plurality of models, the second information comprises one or more of the following:
the information indicating whether the first device supports the data reception required for performing the two-sided training; and
the information indicating whether the first device supports the data processing required for performing the two-sided training.

26. The method of any one of claims 21 to 24, wherein in a case where the two-sided training refers to that a plurality of devices respectively complete model training for a plurality of models, the second information comprises one or more of the following:
the information indicating whether the first device supports the data generation required for the two-sided training; and
the information indicating whether the first device supports the data transmission required for the two-sided training.

27. The method of any one of claims 21 to 24, wherein in a case where the two-sided training refers to that a plurality of devices respectively complete model training for a plurality of models, the second information comprises one or more of the following:
the information indicating whether the two-sided training initiated by the first device is supported; and
the information indicating whether the two-sided training initiated by the second device is supported.

28. The method of any one of claims 21 to 27, wherein the two-sided training is one of a plurality of types of two-sided training, and different types of two-sided training among the plurality of types of two-sided training are associated with different second information.

29. The method of any one of claims 18 to 28, wherein the capability information comprises the third information, and the first condition indicates one or more of the following:
a model-use-case use-case type constraint supported by the first device for the model training;
a model type constraint supported by the first device for the model training;
a model size constraint supported by the first device for the model training;
a data volume constraint for data supported by the first device for the model training;
a computing capability constraint supported by the first device for the model training;
a time constraint supported by the first device for the model training; and
a software constraint supported by the first device for the model training.

30. The method of any one of claims 17 to 29, wherein in a case where the capability information is associated with the model compilation, the capability information indicates whether the first device supports compiling a model into a hardware instruction set.

31. The method of any one of claims 17 to 30, wherein in a case where the capability information is associated with the model deployment, the capability information indicates whether the first device supports deploying a model onto hardware of the first device.

32. The method of any one of claims 17 to 31, further comprising:
sending, by the second device, fourth information to the first device, wherein the fourth information comprises one or more of the following:
information indicating that the first device sends the capability information; and
information indicating information content required to be carried in the capability information to be sent by the first device.

33. A communication device, the communication device being a first device and comprising:
a sending unit configured to send capability information of the first device to a second device, wherein the capability information is associated with one or more of the following:
model training;
model compilation; and
model deployment.

34. The communication device of claim 33, wherein in a case where the capability information is associated with the model training, the capability information comprises one or more of the following:
first information indicating whether the first device supports the model training;
second information indicating a training type of the model training that is supported by the first device; and
third information indicating a first condition, wherein the first condition is a constraint condition for the first device to perform the model training.

35. The communication device of claim 34, wherein the training type of the model training comprises online training, and the second information further comprises one or more of the following:
information indicating whether the first device supports the online training;
information indicating a duration supported by the first device for the online training;
information indicating a training complexity of the online training that is supported by the first device; and
information indicating a data volume of data supported by the first device for the online training.

36. The communication device of claim 35, wherein the online training is one of a plurality of types of online training, and different types of online training among the plurality of types of online training are associated with different second information.

37. The communication device of claim 34, wherein the training type of the model training comprises two-sided training, and the second information comprises one or more of the following:
information indicating a training device for performing the two-sided training;
information indicating whether the first device supports the two-sided training;
information indicating a training manner of the two-sided training supported by the first device;
information indicating whether the first device supports the two-sided training initiated by the first device;
information indicating whether the first device supports the two-sided training initiated by the second device;
information indicating whether the first device supports data transmission required for performing the two-sided training;
information indicating whether the first device supports data generation required for performing the two-sided training;
information indicating whether the first device supports data reception required for performing the two-sided training; and
information indicating whether the first device supports data processing required for performing the two-sided training.

38. The communication device of claim 37, wherein, in a case where the second information comprises the information indicating the training manner of the two-sided training that is supported by the first device, the training manner of the two-sided training comprises one or more of the following:
a plurality of devices respectively completing model training for a plurality of models;
and
a plurality of devices jointly completing model training for a plurality of models.

39. The communication device of claim 37, wherein in a case where the second information comprises the information indicating the training device for performing the two-sided training, the training device comprises the first device or a target device associated with the first device.

40. The communication device of claim 37, wherein in a case where the second information comprises the information indicating whether the first device supports the data transmission required for performing the two-sided training, and the two-sided training refers to that a plurality of devices jointly complete model training for a plurality of models, the data transmission required for the two-sided training comprises transmission of one or more of the following data:
model parameters required for the two-sided training;
model gradient data required for the two-sided training; and
quantized model data required for the two-sided training.

41. The communication device of any one of claims 37 to 40, wherein in a case where the two-sided training refers to that a plurality of devices respectively complete model training for a plurality of models, the second information comprises one or more of the following:
the information indicating whether the first device supports the data reception required for performing the two-sided training; and
the information indicating whether the first device supports the data processing required for performing the two-sided training.

42. The communication device of any one of claims 37 to 40, wherein in a case where the two-sided training refers to that a plurality of devices respectively complete model training for a plurality of models, the second information comprises one or more of the following:
the information indicating whether the first device supports the data generation required for performing the two-sided training; and
the information indicating whether the first device supports the data transmission required for performing the two-sided training.

43. The communication device of any one of claims 37 to 40, wherein in a case where the two-sided training refers to that a plurality of devices respectively complete model training for a plurality of models, the second information comprises one or more of the following:
the information indicating whether the two-sided training initiated by the first device is supported; and
the information indicating whether the two-sided training initiated by the second device is supported.

44. The communication device of any one of claims 37 to 43, wherein the two-sided training is one of a plurality of types of two-sided training, and different types of two-sided training among the plurality of types of two-sided training are associated with different second information.

45. The communication device of any one of claims 34 to 44, wherein the capability information comprises the third information, and the first condition indicates one or more of the following:
a model-use-case use case type constraint supported by the first device for the model training;
a model type constraint supported by the first device for the model training;
a model size constraint supported by the first device for the model training;
a data volume constraint for data supported by the first device for the model training;
a computing capability constraint supported by the first device for the model training;
a time constraint supported by the first device for the model training; and
a software constraint supported by the first device for the model training.

46. The communication device of any one of claims 33 to 45, wherein in a case where the capability information is associated with the model compilation, the capability information indicates whether the first device supports compiling a model into a hardware instruction set.

47. The communication device of any one of claims 33 to 46, wherein in a case where the capability information is associated with the model deployment, the capability information indicates whether the first device supports deploying a model onto hardware of the first device.

48. The communication device of any one of claims 33 to 47, further comprising:
a receiving unit configured to receive fourth information sent by the second device,
wherein the fourth information comprises one or more of the following:
information indicating that the first device sends the capability information; and
information indicating information content required to be carried in the capability information to be sent by the first device.

49. A communication device, the communication device being a second device and comprising:
a receiving unit configured to receive capability information of a first device sent by the first device, wherein the capability information is associated with one or more of the following:
model training;
model compilation; and
model deployment.

50. The communication device of claim 49, wherein in a case where the capability information is associated with the model training, the capability information comprises one or more of the following:
first information indicating whether the first device supports the model training;
second information indicating a training type of the model training that is supported by the first device; and
third information indicating a first condition, wherein the first condition is a constraint condition for the first device to perform the model training.

51. The communication device of claim 50, wherein the training type of the model training comprises online training, and the second information further comprises one or more of the following:
information indicating whether the first device supports the online training;
information indicating a duration supported by the first device for the online training;
information indicating a training complexity of the online training that is supported by the first device; and
information indicating a data volume of data supported by the first device for the online training.

52. The communication device of claim 51, wherein the online training is one of a plurality of types of online training, and different types of online training among the plurality of types of online training are associated with different second information.

53. The communication device of claim 50, wherein the training type of the model training comprises two-sided training, and the second information comprises one or more of the following:
information indicating a training device for performing the two-sided training;
information indicating whether the first device supports the two-sided training;
information indicating a training manner of the two-sided training that is supported by the first device;
information indicating whether the first device supports the two-sided training initiated by the first device;
information indicating whether the first device supports the two-sided training initiated by the second device;
information indicating whether the first device supports data transmission required for performing the two-sided training;
information indicating whether the first device supports data generation required for performing the two-sided training;
information indicating whether the first device supports data reception required for performing the two-sided training; and
information indicating whether the first device supports data processing required for performing the two-sided training.

54. The communication device of claim 53, wherein in a case where the second information comprises the information indicating the training manner of the two-sided training that is supported by the first device, the training manner of the two-sided training comprises one or more of the following:
a plurality of devices respectively completing model training for a plurality of models;
and
a plurality of devices jointly completing model training for a plurality of models.

55. The communication device of claim 53, wherein in a case where the second information comprises the information indicating the training device for performing the two-sided training, the training device comprises the first device or a target device associated with the first device.

56. The communication device of claim 53, wherein in a case where the second information comprises the information indicating whether the first device supports the data transmission required for performing the two-sided training, and the two-sided training refers to that a plurality of devices jointly complete model training for a plurality of models, the data transmission required for the two-sided training comprises transmission of one or more of the following data:
model parameters required for the two-sided training;
model gradient data required for the two-sided training; and
quantized model data required for the two-sided training.

57. The communication device of any one of claims 53 to 56, wherein in a case where the two-sided training refers to that a plurality of devices respectively complete model training for a plurality of models, the second information comprises one or more of the following:
the information indicating whether the first device supports the data reception required for performing the two-sided training; and
the information indicating whether the first device supports the data processing required for performing the two-sided training.

58. The communication device of any one of claims 53 to 56, wherein in a case where the two-sided training refers to that a plurality of devices respectively complete model training for a plurality of models, the second information comprises one or more of the following:
the information indicating whether the first device supports the data generation required for performing the two-sided training; and
the information indicating whether the first device supports the data transmission required for performing the two-sided training.

59. The communication device of any one of claims 53 to 56, wherein in a case where the two-sided training refers to that a plurality of devices respectively complete model training for a plurality of models, the second information comprises one or more of the following:
the information indicating whether the two-sided training initiated by the first device is supported; and
the information indicating whether the two-sided training initiated by the second device is supported.

60. The communication device of any one of claims 53 to 59, wherein the two-sided training is one of a plurality of types of two-sided training, and different types of two-sided training among the plurality of types of two-sided training are associated with different second information.

61. The communication device of any one of claims 50 to 60, wherein the capability information comprises the third information, and the first condition indicates one or more of the following:
a model-use-case use case type constraint supported by the first device for the model training;
a model type constraint supported by the first device for the model training;
a model size constraint supported by the first device for the model training;
a data volume constraint for data supported by the first device for the model training;
a computing capability constraint supported by the first device for the model training;
a time constraint supported by the first device for the model training; and
a software constraint supported by the first device for the model training.

62. The communication device of any one of claims 49 to 61, wherein in a case where the capability information is associated with the model compilation, the capability information indicates whether the first device supports compiling a model into a hardware instruction set.

63. The communication device of any one of claims 49 to 62, wherein in a case where the capability information is associated with the model deployment, the capability information indicates whether the first device supports deploying a model onto hardware of the first device.

64. The communication device of any one of claims 49 to 63, further comprising:
a sending unit configured to send fourth information to the first device, wherein the fourth information comprises one or more of the following:
information indicating that the first device sends the capability information; and
information indicating information content required to be carried in the capability information to be sent by the first device.

65. A communication device, comprising a transceiver, a memory, and a processor,
wherein the memory is configured to store a program, and the processor is configured to invoke the program stored in the memory and control the transceiver to receive or send signals, so as to cause the communication device to perform the method of any one of claims 1 to 32.

66. An apparatus, comprising a processor configured to invoke a program from a memory, so as to cause the apparatus to perform the method of any one of claims 1 to 32.

67. A chip, comprising a processor configured to invoke a program from a memory, so as to cause a device equipped with the chip to perform the method of any one of claims 1 to 32.

68. A computer-readable storage medium, storing a program for causing a computer to perform the method of any one of claims 1 to 32.

69. A computer program product, comprising a program for causing a computer to perform the method of any one of claims 1 to 32.

70. A computer program for causing a computer to perform the method of any one of claims 1 to 32.
